# EUROPEAN PATENT SPECIFICATION

(11) **EP 3 924 159 B1**
(45) Date of publication and mention of the grant of the patent: **04.09.2024**
(21) Application number: 20763934.5
(22) Date of filing: 12.02.2020
(51) Int. Cl.: B28B 21/02, B63B 21/27, B63B 21/50, E02B 17/00

(54) **METHOD OF MANUFACTURING A SUCTION ANCHOR**
VERFAHREN ZUR HERSTELLUNG EINES SAUGANKERS
PROCÉDÉ DE FABRICATION D'ANCRES VENTOUSES

(30) Priority: 13.02.2019 US 201962804952 P
(43) Date of publication of application: 22.12.2021
(73) Proprietor: Rcam Technologies, Inc., Boulder CO 80303 (US)
(72) Inventor: COTRELL, Jason, Boulder, Colorado 80303 (US)
(74) Representative: Potter Clarkson
(86) International application number: PCT/US2020/017973
(87) International publication number: WO 2020/176262

(56) References cited:
- WO-A1-2017/148961
- JP-A- 2015 034 430
- KR-A- 20130 094 410
- US-A- 3 411 473
- US-A- 3 496 900
- US-A1- 2006 127 187
- US-A1- 2010 318 222
- US-B1- 8 215 873

## Description

### CROSS-REFERENCE TO RELATED APPLICATIONS

This application claims priority to U.S. Provisional Application No. 62/804,952 filed February 13, 2019 and entitled "Systems and Methods for Manufacturing, Assembling, Transporting, and Installing Large Structures."

### GOVERNMENT SUPPORT

This invention was made with government support under grant DE-SC0018822 awarded by the U.S. Department of Energy. The government has certain rights in the invention.

### BACKGROUND

The following description relates to manufacturing, assembling, transporting, and installing large structures, as well as suction anchors used to secure such structures to an underwater floor. JP 2013 034430 A discloses a suction anchor configured to secure sufficient pull-out resistance even for sand ground.

### SUMMARY OF THE INVENTION

The invention is set out in the appended set of claims.

### DESCRIPTION OF DRAWINGS

FIG. 1A is an example tower structure fabricated using 3D-casting methods;
FIG. 1B is an example tower section fabricated using 3D-casting methods;
FIG. 2 is an example system for fabricating large structures from additive materials using 3DCP or 3D casting;
FIG. 3A is an example tower, substructure, and foundation structure manufactured by 3D concrete printing or other concrete manufacturing methods;
FIG. 3B is an example tower, substructure, and suction anchor foundation structure, manufactured by 3D concrete printing or other concrete manufacturing methods, with a wind turbine rotor nacelle assembly installed;
FIG. 3C is an example tower, substructure, and large aspect ratio gravity foundation structure, manufactured by 3D concrete printing or other concrete manufacturing methods, with a wind turbine rotor nacelle assembly installed;
FIG. 3D is an example tower, substructure, and large aspect ratio suction anchor foundation structure, manufactured by 3D concrete printing or other concrete manufacturing methods, with the wind turbine rotor nacelle assembly installed;
FIG. 3E is an example transportation system for manufacturing, assembly, or movement of an example tower, substructure, or large aspect ratio suction anchor foundation structure illustrated with an example wind turbine rotor nacelle assembly installed;
FIG. 3F is an example foundation structure leg component, and an example mid-section, shown in cross section, of the example foundation of FIG 3B;
FIG. 3G is an example support structure system with tower, substructure, and large aspect ratio floating foundation, and a second foundation system anchored to the sea floor using suction anchors to resist the upward and transverse forces on the mooring or anchoring lines.
FIG. 3H is an example substructure, and large aspect ratio suction anchor foundation structure, manufactured by 3D concrete printing or other concrete manufacturing methods, with electrical equipment installed;
FIG. 4 is an example tower, substructure, and foundation system that includes a substructure section, a foundation section, an anchoring system, buoyancy cavities, and a tower interface;
FIG. 5A is an example tower, substructure, and foundation structure system anchored on land that has a foundation section with filled external cavities;
FIG. 5B is an example tower, substructure, and foundation structure system anchored on a seafloor that has a foundation section with filled external cavities;
FIG. 6A is an example tower, substructure, and foundation disposed in a marine environment and manufactured horizontally in sections for wind turbine or water power applications;
FIG. 6B is the example tower, substructure, and foundation of FIG. 6A outside of the marine environment;
FIG. 6C is an example mid-section, shown in cross-section, of the example tower, substructure, and foundation of FIGS. 6A & 6B;
FIG. 7 is an example tower, substructure, and foundation system 700 for wind turbine or water power applications that is manufacturable using 3DCP or other methods;
FIG. 8A is a schematic diagram, in perspective view, of an example suction anchor for securing structures to an underwater floor;
FIG. 8B is a schematic diagram, presented in side and bottom views, of the example suction anchor of FIG. 8A, including various section views associated with the side and bottom views.
FIG. 8C is a section view of the example suction anchor of FIG. 8A coupled to a lid that plugs an opening of the example suction anchor;
FIG. 8D is an elevation view of multiple instances of the example suction anchor of FIG. 8A securing wind turbine structures to the underwater floor;
FIG. 9A is a schematic diagram, in perspective view, of a group of 3D-printed suction anchor (3DSA) units being horizontally wet-towed by tugboats from a quay where the 3DSA units were manufactured and assembled;
FIG. 9B is a schematic diagram, in perspective view, of assembled 3DSA units of FIG. 9A being horizontally wet-towed by tugboats along an open body of water to a target location;
FIG. 10A is a schematic diagram, in perspective view, of a mono suction pile being elevated by a crane during an installation process;
FIG. 10B is a schematic diagram, in perspective view, of the mono suction pile of FIG. 10B being submerged into a body of water during the installation process;
FIG. 11 is a schematic diagram, in cross section, of an example suction bucket that includes an energy storage chamber; and
FIG. 12 is a schematic diagram of features and advantages of an example suction anchor manufactured using 3DCP processes.

### DETAILED DESCRIPTION

Many tall towers, substructures, and foundations (herein referred to as "support structures") that support modern offshore wind turbines, land-based wind turbines, or other equipment such as transformers and substations, and water power devices, such as wave energy converters, are too large to transport over roads, waterways, or rail due to their extremely large dimensions either as individual components, or as assemblies. Moreover, many existing on-site production methods, such as weldments and conventional concrete construction, are too expensive and too slow for the large production volumes needed for modern wind plants. In some implementations, the manufacturing technologies and processes described herein can provide improvements over certain existing technologies and processes. For example, the technologies described may, in certain instances increase production rates, reduce transportation costs, or reduce the capital costs of tall towers and foundations for large equipment or energy devices such as wind and water power technologies or other types of structures. In addition, methods of assembling and transporting partially or fully assembled large energy devices, towers, substructures, equipment, and foundations from the manufacturing or assembly areas to the installation site are needed in regions where large specialized heavy-lift jack-up installation vessels are not available.

Conventional towers, support structures, and foundations for offshore and land-based wind turbines and waterpower devices and other equipment are typically made from rolled and welded steel cylindrical sections. The sections become progressively expensive to transport for larger and taller turbines and water power devices due to weight and size limits from road, waterway, and rail constraints such as bridges, tunnels, and overhead signals. For example, the maximum diameter of a tower for a land-based wind turbine that can be transported over land is less than 4.6 m in most U.S. regions; however, the optimal diameter of a 160-m tall tower made from rolled steel is about 8 m. Offshore towers, substructures (i.e., the tower portion below the water surface), and foundations for offshore wind and wave power devices are even larger in size than towers necessitating on-site or near-site construction methods. For example, manufacturing of a conventional steel jacket substructure and foundation used for offshore structures is slow and very expensive. A 1,500-ton jacket substructure and tower for an offshore wind turbine may cost upwards of approximately $5 million.

In some aspects of what is described here, systems and methods are disclosed that additively manufacture large structures on-site, or that manufacture foundation and tower components in smaller modular sections for transportation to the assembly site. The systems and methods may also be used to additively manufacture suction anchors (or portions thereof) for securing large structures to an underwater floor (e.g., an ocean floor, a lake floor, a river bed, etc.). The large structures include towers, substructures, and corresponding foundation configurations for land-based and offshore wind turbines or waterpower devices. The systems and methods may employ additive materials that are less expensive than conventional materials, or that use additive or other manufacturing methods to manufacture smaller modular components. For example, the additive manufacturing systems and methods may reduce the capital cost of an offshore substructure and tower by up to 80% compared to conventionally manufactured structures, make use of low-cost, regionally sourced cementitious or ceramic materials without expensive temporary formwork, and increase production speed using automation.

In some examples, the systems and methods use additive manufacturing (AM), other concrete manufacturing methods, or combination thereof to manufacture the tower, a substructure, a foundation, a suction anchor, or any combination thereof, for wind turbines installed at or near the location where the support structures are assembled or installed. Such manufacturing may be called, respectively, on-site and near-site manufacturing. In the case of waterpower devices, offshore-wind turbine installations, and equipment, additive manufacturing, other concrete manufacturing methods, or combination thereof can be used for on-site at or near-site construction at or near the dock or port where the turbines and foundations are assembled and staged before being transported by sea to the offshore installation site. By manufacturing structures and foundations on-site or near-site using additive manufacturing methods or other manufacturing methods, transportation may become substantially easier and cheaper than by manufacturing large components far away from the installation site at in-land factories. For instance, instead of transporting over-sized wind turbine tower sections and concrete for a foundation, contractors or other construction personnel may simply transport a mobile additive manufacturing system, along with a relatively smaller amount of additive manufacturing material to or near the manufacturing or installation site. Other manufacturing methods such as concrete casting, match casting, or pre-casting can be used to supplement or to replace the additive manufacturing methods. That is, the structures and/or foundations described herein may be manufactured with related techniques to produce hybrid structures and foundations. For larger wind plant installations, existing material production infrastructure, such as concrete batch plants used for foundations, may be used to produce material for the manufacturing systems. In this way, the systems and methods described herein may reduce the cost of transporting over-sized structures over roads, rail lines, or waterways and reduce the time and cost required to construct the structures.

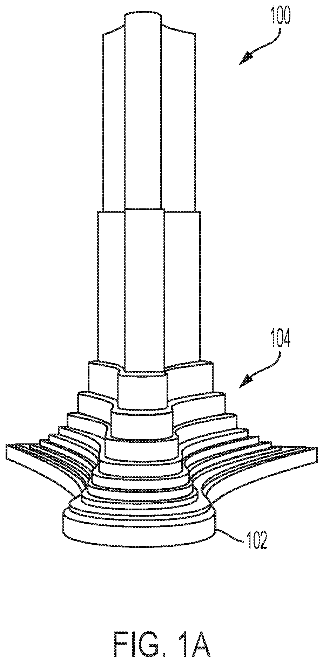

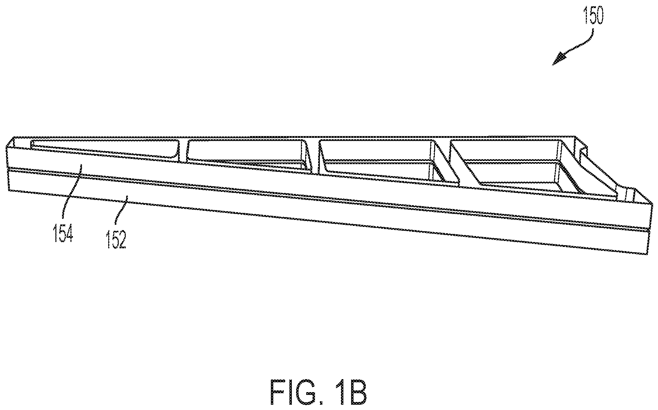

Additive manufacturing, sometimes referred to as "3D printing," creates parts using a layered deposition process to form a three-dimensional (3D) structure by adding layers-upon-layers of materials. Additive manufacturing using cementitious or ceramic materials, sometimes called 3D Concrete Printing (3DCP), can be used for large structures, such as a tower, a substructure, or a foundation for wind turbines or waterpower devices. As shown in FIGS. 1A & 1B, a fast method of 3DCP, referred to here as "3D-casting", uses additive manufacturing to directly 3D-print an initial section 102, 152 of the exterior and interior wall surfaces up to several meters high or taller without a temporary formwork. After a period of hardening, concrete or other cementitious materials are poured or "cast" between the surfaces and allowed to harden. Reinforcement materials such as steel rebar or fibrous mesh can be deposited between the wall surfaces before adding the cast materials to provide additional strengthening of the wall section. Fibrous reinforcement materials can also be mixed into the walls or cast materials before being added to the structures. After sufficient hardening of the cast and 3D printed or cast materials, additional layers of additive materials 104, 154 can then be deposited on top of the lower section 102, 152 of the 3D-cast component to increase the height of the structure by building upper portions of the walls or tower in additional sections. Alternatively, one or more additional sections of wall surfaces, 154, can be manufactured and stacked upon the initial wall surface 152 before additional reinforcement or cast materials are inserted into the initial and stacked wall surfaces in order to reduce the mass and weight of the additive layers 104 to be hoisted. In either case, the 3D-casting processes may be repeated to manufacture additional upper sections resulting in tall support structures that may reach tens or hundreds of meters high.

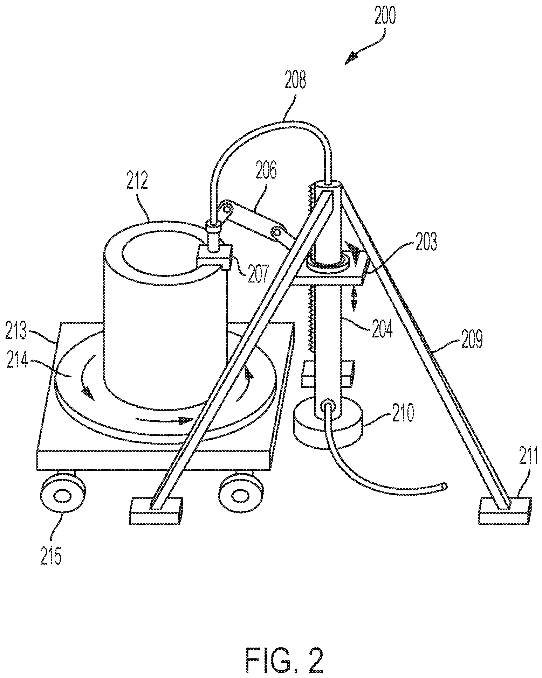

Now referring to FIG. 2, an example system 200 is presented for fabricating large structures from additive materials using 3DCP or 3D casting. FIG. 2 is not necessarily illustrated to scale. The example system 200 includes a fixed or mobile platform to support and position a tower or foundation body portion for manufacturing. The system 200 also includes a print head positioned by an articulated arm for depositing additive manufacturing materials, such as cementitious or other materials. The print head may include a means of imbedding reinforcement into the additive manufacturing material. The system 200 additionally includes a platform and drive system to adjust the vertical position of the articulated arm in which the print head is configured to output, onto at least one wall, additive manufacturing material. In some variations, the print head is positioned using a moveable arm supported by a gantry structure. FIG. 2 depicts the example system 200 as including a platform 203, a guide 204, a drive unit 205, an articulated arm 206, a print head 207, a delivery tube 208, a support arm 209, and feet 210, 211. The example system 200 may include a means of supporting and positioning a manufactured structure 212, which may include a turntable 214, and a cart 213 positioned with tracks or wheels 215. FIG. 2 illustrates one example of a structure fabrication system. Other structure fabrication systems having more, fewer, or different components may be used in other embodiments.

In some implementations, the example print head 207 is configured to deposit cementitious, ceramic, reinforcement, or other additive materials by extruding them onto the printed surface. The print head 207 may be configured to shape the additive materials as they are deposited. In some implementations, the print head 207 is configured to spray the additive materials onto a surface, such as with a process commonly called shotcrete for cementitious or ceramic materials. The shotcrete process may allow for faster material deposition, the ability to deposit materials horizontally or from below, and the ability to more fully cover reinforcement materials that are added to the structure manually or in an automated fashion.

In some implementations, the example system 200 may include one or more additional components (e.g., sensors, an arm, etc.) to finish the surfaces of the structure 212. Such finishing may be for aesthetic purposes or to facilitate joining of one or more body portions. During additive manufacturing, the example system 200 may intentionally or unintentionally create uneven surfaces during construction of the structure 212. Thus, the example system 200 may include additional components to smooth out such unevenness. The additional components may be attached to the articulated arm or be added as one or more additional arms.

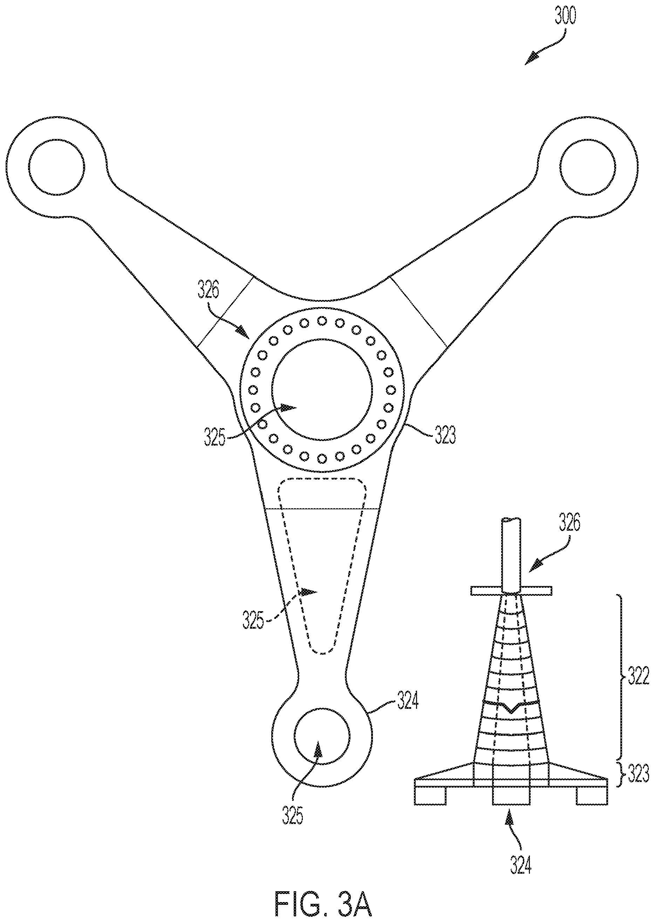

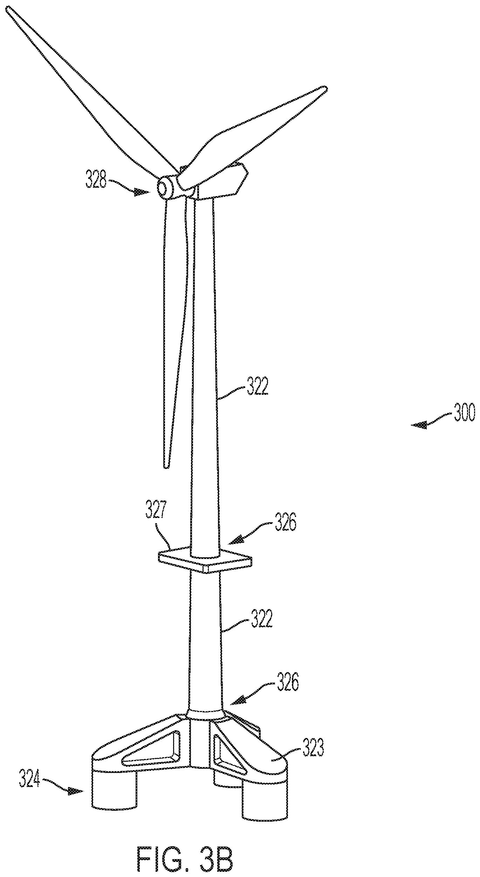

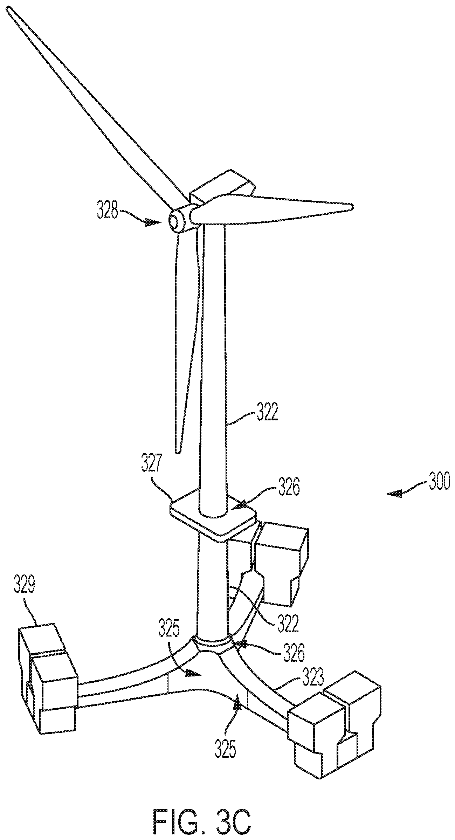

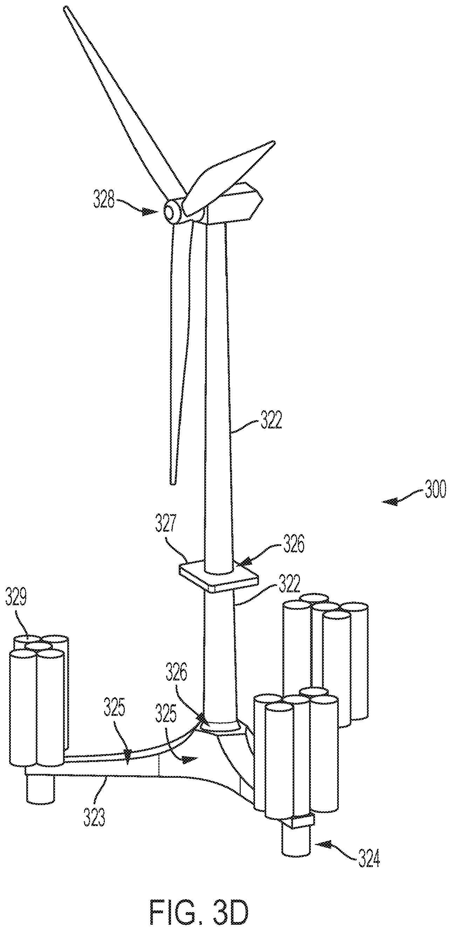

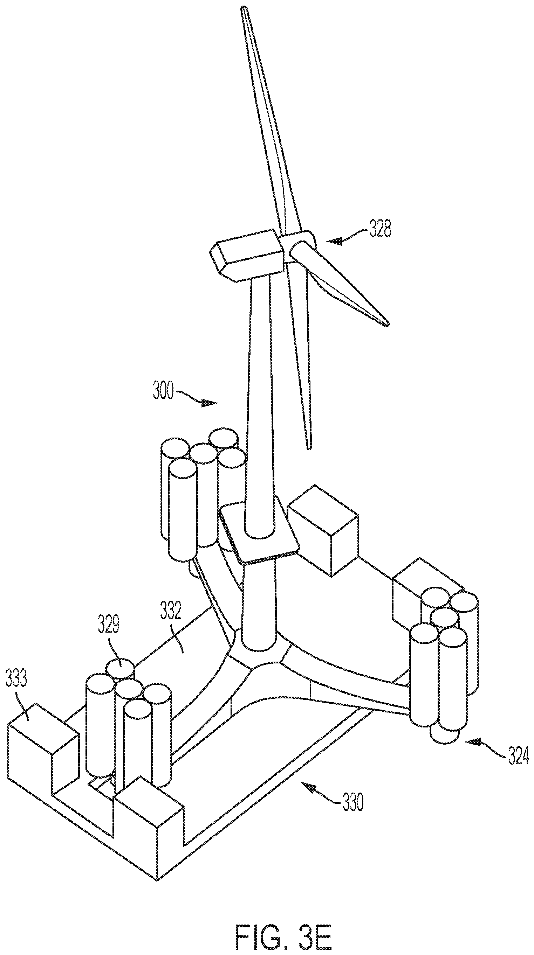

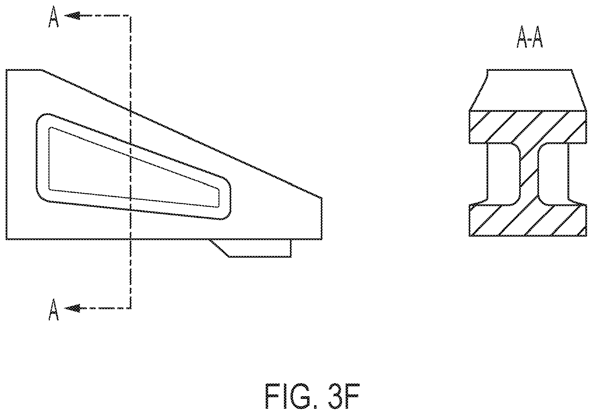

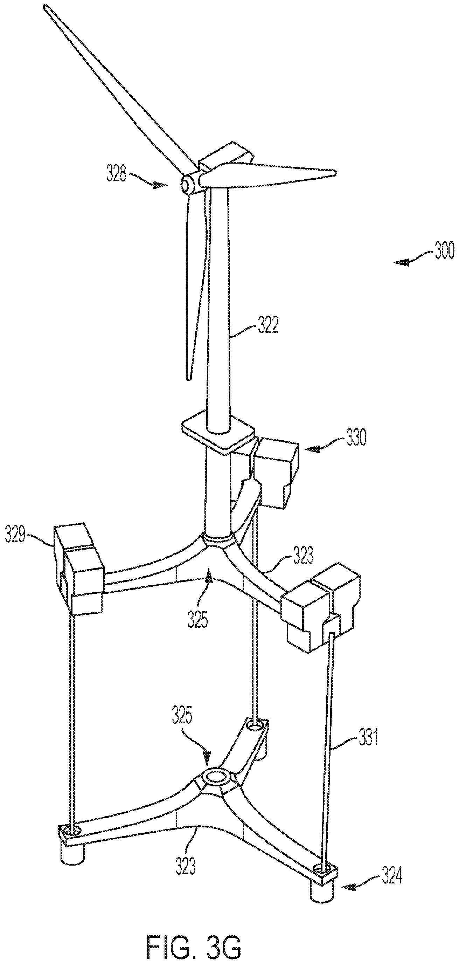

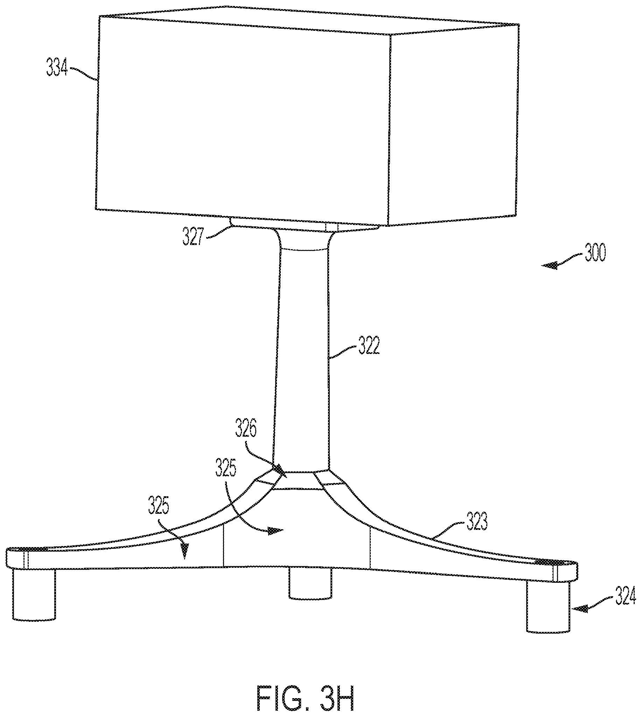

Now referring to FIGS. 3A, 3B, 3C, 3D, 3E, 3F, 3G, and 3H, example tower and foundation structures 300 are presented that are manufactured by 3DCP, 3DCP-casting, other manufacturing processes, or combination of manufacturing practices. The example support structures 300 may include a tower or substructure section 322, a foundation section 323, anchoring system 324 (e.g., a suction anchor system), buoyancy cavities 325, interfaces 326, and additional mass or buoyancy components 329.

The example support structures 300 may be integrated and built as a single piece or manufactured as two or more separate pieces that are joined together using fasteners, post-tensioning tendons, or the like. Furthermore, in some variations, related structures, such as tower sections made of concrete or rolled steel shapes, can be placed and joined directly on top of the tower or substructure section 322 to further extend the tower height, or be placed directly on top of the foundations described herein. That is, the structures and/or foundations described herein may be combined with related techniques to produce hybrid structures and foundations. Fasteners or post-tensioning tendons can also be used to further strengthen the structure by applying compressive stresses to the structure, thereby reducing the number or magnitude of tensile loads in the concrete. The fasteners or post-tensioning tendons may be part of a method to pre-stress the structure.

The tower and support structure sections 322 and foundation components 323 may be manufactured using additive or other manufacturing processes with the tower and legs positioned vertically or horizontally. In the example shown in FIG. 3F, a foundation support component (a "leg") for the foundation illustrated in FIG. 3B is built-up, with the leg positioned vertically, in 10 sections, each 2 meters tall. Section A-A in FIG. 3F is an example of one of the middle sections that may be manufactured. In a 3D-casting manufacturing process, the leg's inner and outer surface profiles and any interior features such as cavities can be printed in successive layers up to approximately 2 inches tall. In some cases, reinforcements (such as fiberglass, basalt, or steel rebar or fibers) can be positioned between the inner and outer surfaces in each section after the section height reaches approximately one to three meters, and before additional cast materials are added to the section. After the walls strengthen, cementitious, ceramic, or other additive materials, potentially mixed with reinforcing fibers, are poured into the volume between the inner and outer surfaces. An example reinforcement design is to use an Engineered Cementitious Composite (ECC) concrete and post-tensioning across the layers and sections to withstand the loads on the leg, potentially eliminating the need for manual rebar placement. The ECC concrete may include mortar-based composites reinforced with specially selected short random fibers such as steel, polymer, or organic fibers. After the cast materials strengthen, the inner and outer surfaces for the next 3DCP-cast section may be printed on the previous section. The section-on-section construction process may be similar to the concrete construction process known as match-casting for bridges and some concrete wind turbine towers. 3DCP match-casting can eliminate the need for expensive mortar or machining operations between layers by printing new sections on top of lower sections. In some examples, after printing, the 3DCP components cure for a period of up to 4 weeks depending on the materials. The sections may then be post-tensioned in various directions such as across the additive layers and match-cast joints using post tensioning rods, tendons or fasteners or the like during assembly in order to strengthen the sections in various directions. Additional 3DCP components such as the suction anchors 324, the substructure and tower 322, or both, may then be attached to the structure using post tensioning rods, tendons or fasteners.

The example structures 322, 323 shown in the figures may be above ground-level for land-based wind systems, or above the seafloor for offshore applications. However, in some variations, the structures 322, 323 may be entirely or partially below ground-level, or below the seafloor in the case of structures deployed in the bodies of water. In addition, the structures 322, 323, and 329 may extend above the water surface in offshore applications.

FIGS. 3A, 3B, 3C, 3D, 3E, 3F, and 3H depict the tower or support structure 322 as generally cylindrical. This cylindrical shape may be continuous or may have one or multiple interfaces 326 with the foundation 323, other substructure or tower sections 322, or a wind or wave energy generating device 328, or equipment 334. In some implementations, the tower or substructure 322, or foundation 323 may be another shape, such as a square, a pyramid, frustum, polygon, or other shape. A wall of tower structure 322 may incorporate relatively complex geometries, such as doorway, or structural supports, baffles, conduits, work platforms 327 or other customizable geometry.

The support structure system 300 may be used as a fixed-bottom foundation that interfaces with the ground for a land-based installation, or with the seafloor for an offshore fixed-bottom installation. Now referring to FIG 3G, in other offshore installations, the foundation structure system 300 may be used as a floating wind turbine foundation 323. The movement of the floating wind turbine foundation structure system 300 may be restrained using cables, chains, or other types of mooring or anchoring lines 331. One or more of foundation systems 323 on the seafloor may also be used to resist the upward and transverse forces on the mooring or anchoring lines. The foundation system 323 on the seafloor may include a suction anchor system 324, ballast or buoyancy cavities 325, additional buoyancy or masses, and one or more mooring or anchoring lines 331. The floating foundation system 300 and foundation system anchored to the seafloor 323 may be manufactured using 3D concrete printing or other concrete manufacturing methods, and may be assembled, transported, or installed using methods similar those described for the foundation systems in FIGS. 3A, 3B, 3C, 3D, 3E, 3F and 3H.

In the example of FIG. 3G, the floating substructure system 300 and anchoring system 323 can be referred to as a tension leg platform configuration in which the floating substructure system 300 is a moored vertically with the buoyancy masses 329 and cavities 325 fully or partially beneath the water surface 330. In other example configurations, the floating foundation system 300 can be configured in a semi-submersible configuration in which the buoyancy masses 329 and cavities 325 extend partially above the water. The mooring lines may take other forms such as catenary or semi-taut mooring. In other examples, the floating wind turbine foundation 300 may take the form of a floating barge foundation or spar foundation. That is, the foundation section 323 on the seafloor can be used as means of anchoring or mooring a variety of floating support structures.

Now referring to the example in FIG. 3H, in other offshore installations, the foundation structure systems described herein may optionally be used to support other types of equipment 334 such as electrical equipment or enclosures needed to condition the electricity from wind or wave energy devices, or electrolysis equipment needed to produce hydrogen using the electricity from wind or wave energy devices. The example support structure 300 may include a tower or substructure section 322, a foundation section 323, anchoring system 324 (e.g., a suction anchor system), buoyancy cavities 325, interfaces 326, and additional mass or buoyancy components 329. Components of the equipment foundation system 300 may be manufactured using 3D concrete printing or other concrete manufacturing methods, and assembled, transported, or installed using methods similar those described for the systems in FIGS. 3A-3G.

The foundation section 323 can be manufactured to have no arms or a multitude of arms. In some instances, such as shown in FIGS. 3A, 3B, 3C, 3D, 3E, 3F, 3G, and 3H the foundation section 323 has three arms. The mass of structures 323 and 322 may act to prevent the wind turbine system from overturning due to wind or water loads. The foundation section 323 can be further anchored to the seafloor using suction anchors inserted through or attached to the arms. In the case of an offshore installation, steel or cementitious suction anchors 324 can be alternatively fastened to the arms to secure the foundation to the seafloor, or the suction anchors can be built as integrated components using for example the 3DCP or 3DCP casting process, or other manufacturing processes. A thin knife edge or surface can be added or built into the bottom of the suction anchor to facilitate penetration of the seafloor, especially for thick walled suction anchors. Suction anchors (also called suction caissons or suction piles) can effectively be described as an upturned bucket that is embedded in the marine sediment. This embedment is either achieved by pushing and/or by creating a negative pressure inside a skirt of the suction anchor. Both of these techniques have the effect of securing the caisson into an underwater floor (or sea bed). The foundation section 323 can also be rapidly removed by reversing the installation process, applying pressure inside the caisson skirt with air, water, or other fluids.

An amount of additive materials used to fabricate the foundation section 323 can be reduced by incorporating cavities 325 in the structure in areas where stresses in the structure tend to be lower and less material needed. The cavities 325 can also be sealed using covers or with surfaces manufactured as part of the tower 322 or foundation 323 using 3DCP, 3DCP-casting, or other manufacturing methods to create chambers in the foundation. The chambers can be used to create a buoyant force to aid during transportation and installation of the foundation section 323, the tower 322, and, optionally, the wind power or water power device 328 attached the tower 322. Alternatively, the cavities 325 can be filled with water, sand, iron ore, recycled crushed concrete, gravel, stones or other materials to provide additional weight to resist overturning of the structure from wind or wave loads after installation of the structure.

The support structure 300 may reduce cost, have less mass, generate less waste, allow faster production, and include on-site or near-site manufacturing compared to conventional manufacturing methods such as steel weldments, slip formed concrete, cast concrete, or pre-cast concrete. Additive manufacturing methods can be used to manufacture structure 300 to reduce cost and construction waste and increase production speed by reducing the need for temporary formwork required for concrete construction while still using low cost additive materials and reinforcements. An automated additive manufacturing process may increase speed and further reduces costs using a smaller work crew than conventional methods. Other manufacturing process such as concrete casting, match casting, slip forming, or pre-casting can be used in place of, or in conjunction with additive manufacturing methods. The additive manufacturing processes, and the other concrete manufacturing processes with smaller modular components can be used to reduce costs by facilitating manufacturing near-site or on-site, thereby reducing transportation of large structures or sections over roads, rail-lines or waterways. Compared to steel structures, the additive and modular concrete manufacturing processes described herein may eliminate the need for expensive and slow welding processes, weld inspection, and surface finishing such as primers and paints. Furthermore, the cementitious materials used by the 3DCP process are typically much lower cost than steel structures on a per mass basis.

Now referring to FIGS. 3C and 3D, an example wind turbine, tower, and large aspect ratio foundation structure 323 are presented that are manufactured by a 3DCP or other concrete manufacturing process. The example foundation structures 323 in FIGS. 3C and 3D differ from the example foundation structures 323 in FIGS. 3A and 3B by the length and aspect ratio of the foundation structure arms. The foundation arms of foundations 323 in FIGS. 3C and 3D are characteristically longer than in FIG. 3A and FIG. 3B, and longer in relation to the size of the energy capture mechanism of the energy generating device 328. The longer foundation arms of FIGS. 3C and 3D relative to FIGS. 3A and 3B increase the stability of the foundation and substructure 300 during assembly, transport, installation, and removal of the support structure 300. The longer foundation arms also increase the stability of the foundation and substructure 300 during operation of the energy device 328 and increase resistance of the support structure 300 to overturning during extreme wind and wave weather events. The use of cementitious materials for the substructure components 300, and the low aspect ratio arms result in a low center of gravity system that further aids in stability during transport of the support structure 300, optionally with the energy collection device 328 installed.

In the examples of FIGS. 3C and 3D, the foundation arms are approximately at least ¼ (one fourth) the length of the blades of the energy device, while in FIG. 3B, the foundation arms approximately only 1/8 (one eighth) of the blade length. Furthermore, in the examples of FIGS. 3C and 3D, the foundation arm length is larger in relation to the foundation arm width and arm height which can be described as having a larger aspect ratio than the foundation in FIGS. 3A and 3B. In the example shown in FIGS. 3C and 3D, the foundation 323 aspect ratio of the arm length to height is approximately 5:1 which is substantially larger than the aspect ratio in Figure 3B of approximately 2:1.

Similar to the design of the smaller aspect ratio foundations of FIGS. 3A and 3B 323, the larger aspect ratio foundations 323 of FIGS. 3C and 3D can include cavities 325 in the structure in areas where stresses in the structure tend to be lower and less material needed. The cavities 325 can also be sealed using covers or with surfaces manufactured as part of the tower 322 or foundation 323 using 3DCP, 3DCP-casting, or other manufacturing methods to create chambers in the foundation. The cavities 325 can be filled with sand, iron ore, recycled crushed concrete, gravel, stones or other materials to provide additional ballast and stability during transport or resist overturning of the structure from wind or wave loads after installation of the structure. The chambers can be used to create a buoyant force to aid during transportation, installation, and removal of the support structure 300, and, optionally, with the wind power or water power device 328 attached to the tower 322. The buoyant forces may allow the support structure and energy device assembly to be towed from location to location by low cost tugs or other vessels similar to how submersible drilling platforms are supported and towed without the use of large specialized heavy lift installation vessels that are typically used for transport and installation.

Additional mass or buoyancy components 329 can be integrated into, or attached to the foundation 323, tower or substructure 322 using fasteners, post-tensioning tendons, or the like to provide additional buoyant force to aid during transportation from site to site and during installation. The buoyancy components 329 can be sized to extend partially above the surface of the water during transport, or during installation to increase the stability of the structure by providing a restoring force that rights the foundation 323 from a heeled position that may result from forces such as by wind and wave loads during transport. The buoyancy components 329 or foundation legs 323 can be fabricated in a cylindrical fashion that function as pontoons below the surface of the water to provide buoyancy, optionally with columns that extend above the water surface. Once at the installation location, the buoyancy components 329 or pontoon structures are flooded in a controlled fashion causing the support structure 300 to lower to the sea floor. The buoyancy components 329 can be used to provide additional mass after installation to prevent the wind turbine system from overturning due to wind or water loads. The additional mass or buoyancy components 329 may be permanently affixed to the foundation 323, such as in FIG. 3C, or may be temporarily affixed to facilitate removal after installation, such as in FIG. 3D, for reuse with other support structures 300 that may be deployed.

Now referring to FIG. 3E, an example tower, substructure, foundation system, 300, and optionally, the wind power or water power device 328, and a marine vessel 330 is presented for transferring the support structure system 300, optionally with the energy collection device 328 installed, from the quay into the water. A transportation vessel 330 may also be used for transportation of the support structure 300 or energy device 328 in locations where the available water depth is not sufficiently deep for floatation with only the support structure buoyancy, such as in many U.S. ports, to allow the support structure 300 and energy collection device 328 to be floated for transport from site to site.

The marine vessel system 330 includes a platform 332 for supporting the foundation system 300, buoyancy mechanisms 333, and various geometric features to provide clearance for the foundation system components 300. The marine vessel system 330 may be self-propelled with thrusters or other means or may rely on towing or pushing with tugs or other propelled vessels. The marine vessel platform 332 may include a means of securing the foundation system components 300 during transport or storage. The marine vessel platform 330 may include cavities in the structure in areas where stresses in the structure tend to be lower and less material needed. The cavities can be filled with water, sand, iron ore, recycled crushed concrete, gravel, stones or other materials to provide additional ballast and stability to resist overturning of the structure from wind or wave loads. The cavities can be used to create a buoyant force for floatation of the vessel and any cargo. Additional marine vessel buoyancy mechanisms 333 may be used to assist with lowering and raising the marine vessel with or without the support structure system 300, or energy collection device 328. The buoyancy mechanisms 333 can be used to increase the stability of the structure during raising and lowering by providing a restoring force that rights the vessel 330 from a heeled position that may result from forces such as by wind, wave, or gravity loads on the vessel 330, support structure 300, or energy device 328 during transport.

The marine vessel 330 may be designed to be rigidly supported during docking to provide stability during loading, unloading, during periods of severe weather, or in other various situations that may be useful. Such support may be provided, for example, by lowering the bottom of the vessel platform 332 to rest on the port seafloor, or on fabricated supports affixed to the seafloor, or the like. The marine vessel may be supported by the seafloor using one or multiple jacking legs that can be extended down from the platform into the ground beneath.

The marine vessel system may be used to assemble and transport the foundation system 300 and optionally the energy device 328 from site to site for purposes of further assembly, installation, or removal of the foundation system or energy device. Such techniques may include one, some, or all of the following processes: 1) assembly or partial assembly of the support structure system 300 and optionally the energy device 328 on the quay or on the vessel 330; 2) movement of the assembled or partially assembled system onto the marine vessel system 330 using cranes, self-propelled modular transporters or the like onto the vessel 330; 3) further assembly of the foundation system 300 or energy device 328 while on the marine vessel 330; 4) floatation and transport of the marine vessel 330, support structure 300, or energy system 328 to another location for further assembly; 5) floatation and transport to an optional queuing site with temporary mooring, or transport to the final installation site; 6) lowering the marine vessel system 330 until the foundation system 300 can be floated off of the vessel system; 7) raising the marine vessel system 330 for transport back to port or the next work site; 8) movement and position of the support structure 300 and optionally the energy device 328 with tugs or other vessels for final installation; 9) controlled lowering of the foundation system 300 optionally with the energy collection device 328 to the seafloor; 10) final operations necessary to secure the foundation system to the seafloor such as evacuating suction anchors 324 if provided or flooding of buoyancy chambers 325 and mechanisms 329; 11) additional assembly operations for the support structure 300 or energy collection device 328 if necessary; and 12) removal, floatation, and transport of supplementary foundation system buoyancy mechanisms 329 for reuse.

The marine vessel system may also be used for operation of energy systems or logistics. For example, the marine vessel system may be used as part of a method to remove, service, or disassemble a foundation system or energy device by proceeding with relevant aforementioned steps in approximately the reverse order. As another example, the marine vessel system may also be used for transporting floating wind turbine foundations of various designs (i.e. such as semi-submersible wind or barge turbine foundations) that are anchored or moored to the seafloor rather than rigidly affixed to the seafloor as described in the aforementioned foundation system 300.

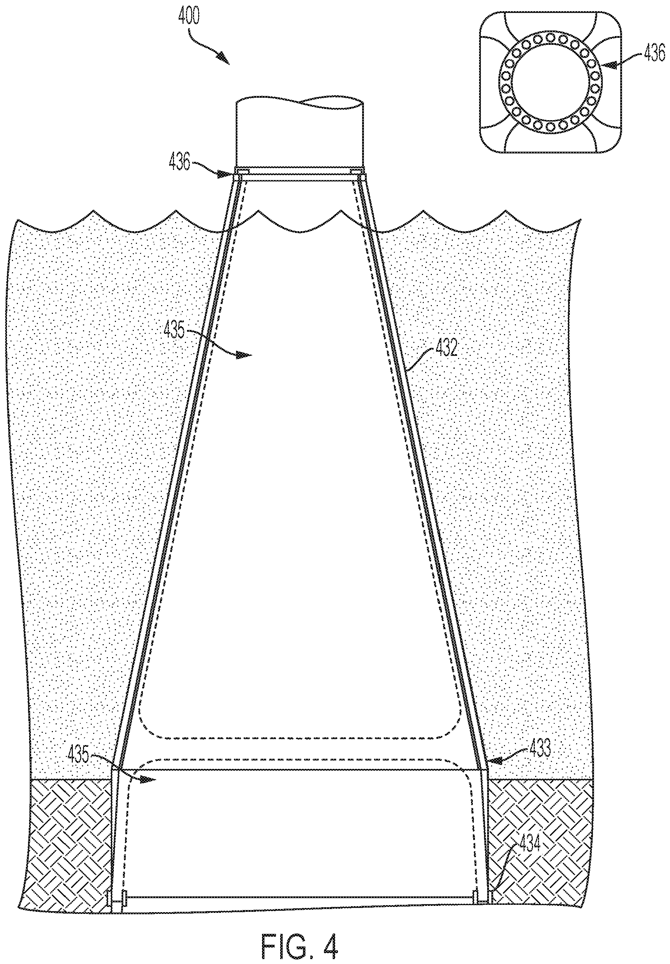

Now referring to FIG. 4, an example tower, substructure, and foundation system 400 is presented that includes a substructure section 432, a foundation section 433, an anchoring system 434, cavities 435, and a tower interface 436. The system 400 differs from the support structure system 300 of FIG. 3 by lacking arms and having only one-suction anchor (referred to as a mono-bucket). These features may allow the system 400 to have a smaller diameter and potentially less mass. The foundation section 433 includes a suction anchor, which may be a cylindrical shape, but can also take other shapes such as a hexagonal shape or a square shape. The suction anchor can be integrated into the substructure section 432, or alternatively, fastened to the substructure section 432 using bolts or tensioning cables extending through the substructure and foundation walls, or within the tower and foundation interior. The suction anchor can be made from cementitious materials, ceramic materials, metallic materials, or any combination thereof. A thin knife edge or surface 434 made from steel or other materials can be added to the bottom of the suction pile to facilitate penetration of the seafloor, especially for thick walled suction piles that may be made from concrete. The cavities 435 are volumes that can serve the purposes of reducing the mass of the structure, for providing buoyancy by displacing water with a less dense material such as air or foam, or for adding ballast materials to the system 300.

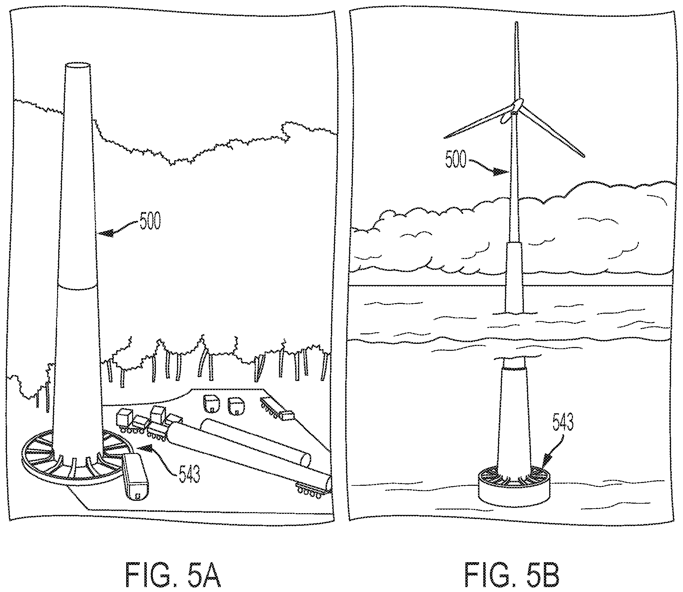

Now referring to FIGS. 5A & 5B, an example tower, substructure, and foundation structure system 500 is presented in which a foundation section 543 contains external cavities filled with sand, iron ore, recycled concrete or other materials. FIG. 5A presents one variant of the system 500 anchored on land. FIG. 5B presents another variant of the system 500 anchored on a seafloor. The filled external cavities may replace a suction pile to provide the required weight to resist overturning of the structure from wind or water loads, or work in conjunction with a suction pile to provide additional resistance to overturning forces.

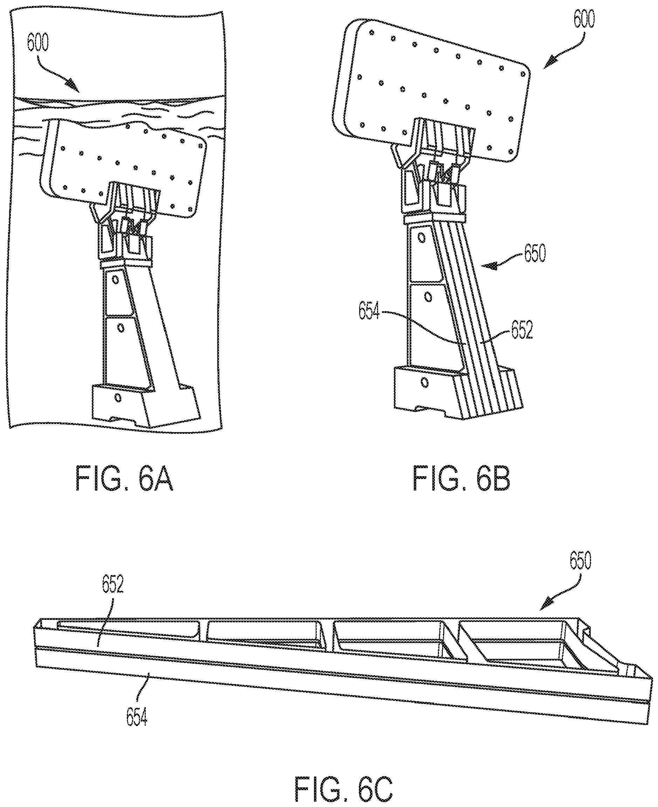

Now referring to FIGS. 6A-6B, an example tower, substructure, and foundation 600 is presented that is manufactured horizontally in sections for wind turbine or water power applications using 3DCP, 3DCP-casting methods, or other manufacturing methods. In other variations, the tower, substructure, and foundation 600 can be manufactured vertically. FIG. 6A presents the example tower, substructure, and foundation 600 as installed in a marine environment and anchored on a seafloor. FIG. 6C presents an example mid-section 650, shown in cross-section, of the example tower, substructure, and foundation of FIGS. 6A & 6B.

The tower sections may be manufactured with the tower positioned vertically, and the 3D-cast sections 652, 654 may be manufactured horizontally. Such horizontal manufacturing may be similar to the system 300 of FIG. 3. In the example shown, an integrated primary central tower/substructure/foundation support member (hereinafter as "tower") is built-up with the tower positioned horizontally in 4 sections, each 2-m tall. The tower's inner and outer surface profiles and interior features such as cavities are printed in successive layers up to approximately 2 inches tall. If necessary, reinforcements (such as fiberglass, basalt, or steel rebar or fibers) can be positioned between the inner and outer surfaces in each section after the section height reaches approximately one to three meters, and before additional cast materials are added to the section. After the walls strengthen, cementitious, ceramic, or other additive materials - optionally mixed with reinforcing fibers - are poured into the volume between the inner and outer surfaces. In some variations, reinforcement can be achieved (or enhanced) using Engineered Cementitious Composite (ECC) concrete and post-tensioning across the layers and sections in order to withstand the loads on the tower. This reinforcement may potentially eliminate the need for manual rebar placement. The ECC concrete may include mortar-based composites reinforced with specially selected short random fibers such as steel, polymer, or organic fibers. After the cast materials strengthen, the inner and outer surfaces for the next 3DCP-cast section can be printed on the previous section. The section-on-section construction process may be similar to the concrete construction process, known as match-casting, for bridges and some concrete wind turbine towers. 3DCP match-casting eliminates the need for expensive mortar or machining operations between layers by printing new sections on top of lower sections. After printing, the 3DCP components cure for a period of up to 4 weeks depending on the materials. Additional 3DCP components such as the tower "feet", the removable upper tower section, and the flap can then be attached to the structure using post tensioning rods, tendons or fasteners.

The tower and foundation components for an offshore structure may be designed to be manufactured and assembled horizontally on the dock, or in a dry dock. A variety of methods can be used to move the assembled tower and flap assembly from a dock to the water such as a crane or marine travel lift and boat launch. The flexibility of 3DCP manufacturing allows integrated buoyancy chambers to be incorporated into the support structure or tower to enable the fully assembled wave energy device to be floated horizontally to the installation site using inexpensive, readily available tugs. After reaching the installation site, the buoyancy chambers may be flooded to submerge and rotate the system 600 vertically in a controlled fashion. The buoyancy chambers may then be filled with dredged materials such as sand, or regionally available materials like iron ore or recycled crushed concrete to provide ballast to resist overturning forces.

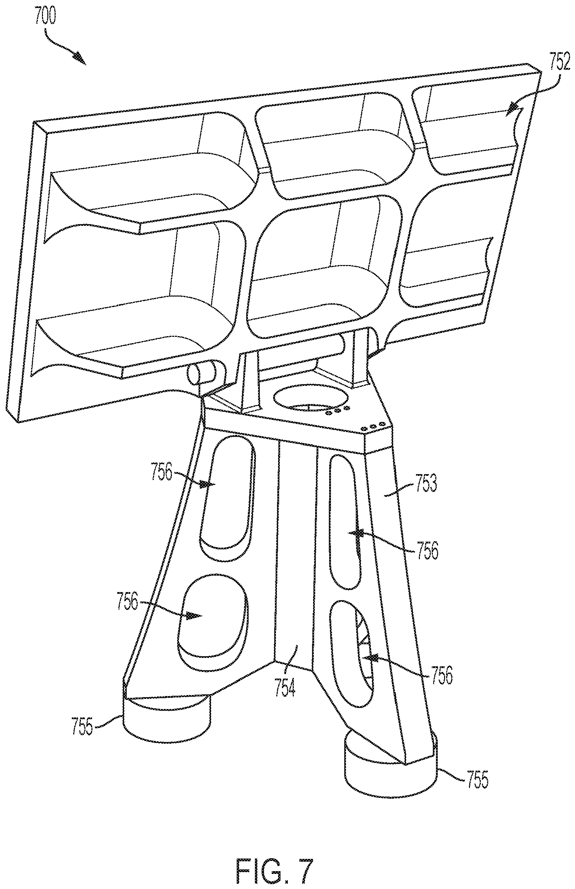

Now referring to FIG. 7, an example tower, substructure, and foundation system 700 is presented that can be manufactured using 3DCP methods for wind turbine or water power applications. The example system 700 is shown with a flap 752 manufactured by 3DCP methods as an example of additional applications for 3DCP methods. The primary components of example system 700 include a plurality of tower side members 753, a tower central column 754, and a plurality of suction anchors 755. The tower and foundation components can be manufactured as integral pieces, or as separate pieces connected with fasteners or tension cables. 3D printing or 3D-casting can be used to manufacture the components. Cavities 756 in the side members 753 can be enclosed for additional buoyancy or ballast, or alternatively, be left open as shown in FIG. 7 to reduce the wave and current loads on the tower and foundation.

In some aspects of what is described here, the systems and methods disclosed herein may also be used to additively manufacture suction anchors (or portions thereof) for securing structures to an underwater floor (e.g., an ocean floor, a lake floor, a river bed, etc.). The structures, for example, may correspond to towers, support structures, and foundations for offshore wind turbines. However, other types of structures are possible. Approximately 60% of the U.S. offshore wind resource area is in water depths greater than 60 m - too deep for conventional fixed-bottom substructures. Floating wind turbines, however, face several challenges, especially with regard to station keeping and mooring, e.g., high anchor fabrication and installation costs, installation location precision, installation time, installation in high wind, wave, and current conditions, mooring sea-keeping performance, and structural reliability.

In shallower floating sites (e.g., up to 100 m), mooring is particularly demanding because of the need to avoid line snap-loads that are promoted by both challenging wave regimes and reduced mooring hydrodynamic stiffness - especially with catenary systems. This is accompanied by increased line and anchor loads, especially cyclic vertical loads that cannot be easily handled by conventional embedment anchors. In these cases, seabed stresses caused by wave induced loading propagate into the subsoil and increase pore water pressure leading to a potential for liquefaction. In deeper waters (e.g., 250-1000 m), mooring lines are long, heavy, and expensive. Furthermore, especially in the case of steel catenary mooring, heavy lines increase demands on the floating foundation and have a wide footprint that impacts fishing operations.

Suction anchors are a preferred floating turbine anchor solution, as they can be installed in nearly all water depths, withstand omnidirectional loading, and can be installed with high location accuracy. Suction anchors have potential for use in all water depths greater than 60 m, with virtually any floating substructure configuration (e.g., semi-submersible, barge, spar, and tension leg), and any mooring layout (e.g., catenary, semi-taut, and taut). Suction anchors offer faster installation speeds, resist multi-directional loading, reduce mooring footprint, improve installation position precision, and work well with shared mooring and synthetic mooring lines. However, they have been associated with high costs, partly due to the large steel quantities and extensive manufacturing labor, and partly because of the specialized anchor handling vessels used for deployment. In addition, many countries import steel anchors because they do not have the existing supply chain efficiencies to manufacture suction buckets domestically.

The systems and methods disclosed herein may be used to realize 3D concrete printed suction anchors (3DSA). 3DSA draws upon and combines the advantages offered by anchoring solutions already existing in the industry, into an innovative, cost-disruptive design. 3DSA also uses low-cost 3D concrete printing technologies, with domestically available concrete materials to manufacture low-cost suction anchors that can be floated to the installation site with inexpensive, readily-available tugs.

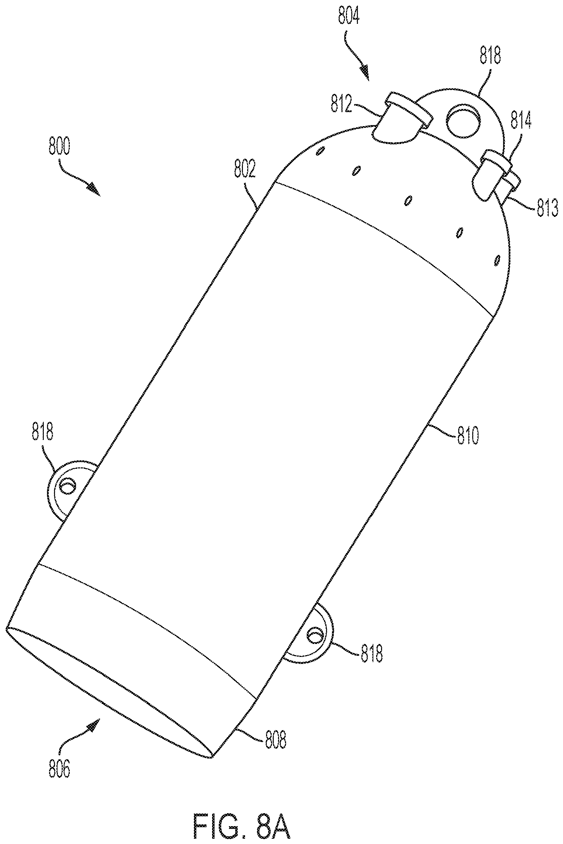

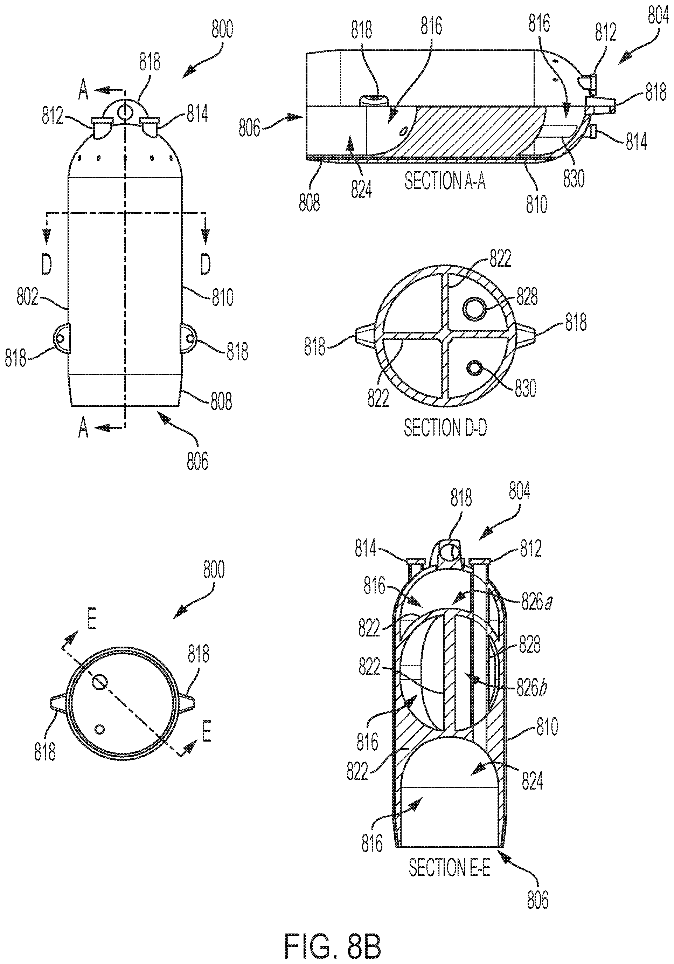

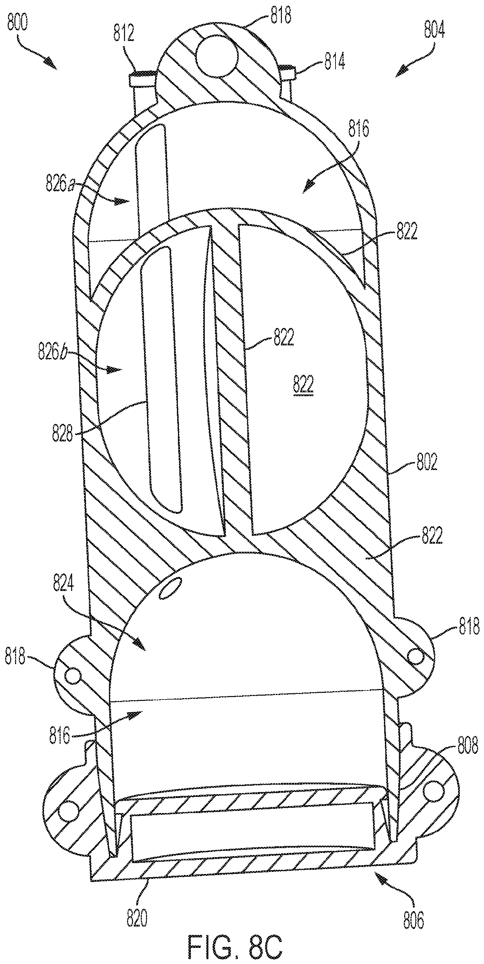

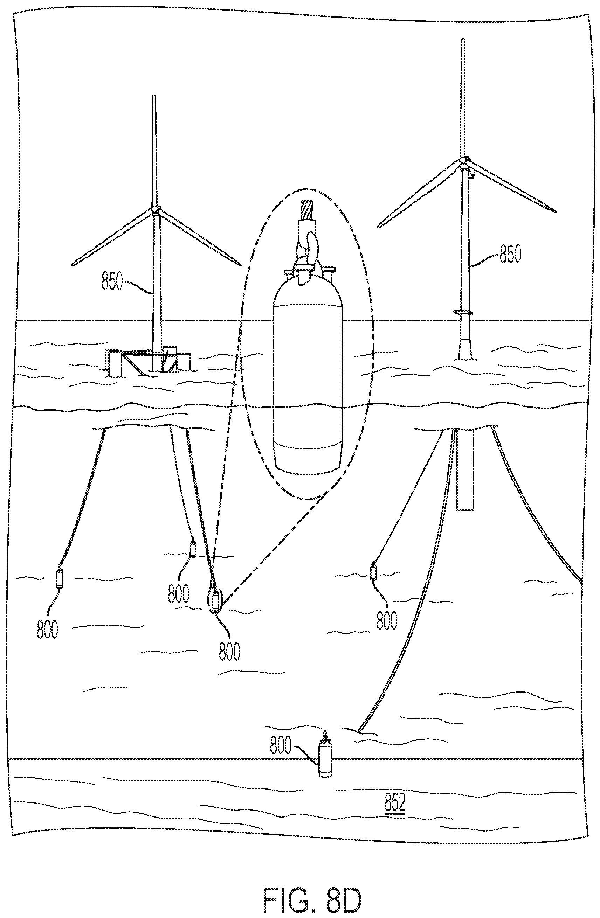

Now referring to FIG. 8A, a schematic diagram is presented, in perspective view, of an example suction anchor 800 for securing structures to an underwater floor. The example suction anchor 800 may also be referred to as a suction pile, a suction caisson, a suction bucket, or a suction installed caisson anchor. FIG. 8B presents a schematic diagram, in side and bottom views, of the example suction anchor 800 of FIG. 8A, including various section views associated with the side and bottom views. FIG. 8C presents a section view of the example suction anchor 800 of FIG. 8A coupled to a lid 820 that plugs an opening of the example suction anchor 800. The section view is generated by a mid-plane bisecting the example suction anchor 800 mid-plane longitudinally. The example suction anchor 800 may be configured to submerge and penetrate into the underwater floor, and once penetrated, remain embedded, such as by water pressure against exterior surfaces of the example suction anchor 800. Examples of the underwater floor include an ocean floor, a sea floor, a lake floor, or a riverbed. FIG. 8D presents a schematic diagram, in elevation view, of multiple instances of the example suction anchor 800 of FIG. 8A securing wind turbine structures 850 to the underwater floor 852.

The suction anchor 800 includes a tubular body 802 formed at least in part of cementitious materials and having a closed end 804 and an open end 806. The portion of the tubular body 802 formed of cementitious materials may include layers of successively deposited cementitious materials, such as those deposited by 3DCP or 3D-casting processes. Such processes may manipulate a flowable cementitious material (e.g., via extrusion, spray, printing, etc.) that subsequently hardens into a solidified cementitious material. For example, the flowable cementitious material may be deposited as successive layers that harden into a solidified body. The successive layers may be disposed on top of each other such that a subsequent layer comes in direct contact with a prior layer. However, intervening structures may be possible between adjacent layers, such as a support mesh, rebar, etc. The solidified body may then define part or all of the tubular body 802. The tubular body 802 includes an edge 808 defining an opening of the open end 806 and configured to penetrate the underwater floor 852. In some variations, the edge 808 tapers towards the opening of the open end 806. In these variations, the taper may terminate in a tip sufficiently sharp to penetrate the underwater floor 852 but not fail mechanically (e.g., crack crumble, etc.). In some variations, the edge 808 is formed of a metal or metal alloy (e.g., steel). In these variations, the edge 808 may include surfaces configured to bond to cementitious material. For example, the surfaces may have a texture or be chemically treated to bond with cementitious material (or improve such a bond).

In many implementations, a perimeter wall 810 defines a shape of the tubular body 802. The perimeter wall 810 may have a cross section that is constant or varies from the closed end 804 to the open end 806. Examples of the cross section include a circular cross section, a square cross section, a hexagonal cross section, a sinusoidal cross section, and a ribbed cross section. Other cross sections are possible. In FIGS. 8A-8D, the tubular body 802 includes a perimeter wall 810 with a circular cross-section that is more or less constant from the closed end 804 to the open end 806, except along the hemispherical taper of the closed end 804. Along the hemispherical taper, the shape of the circular cross-section remains constant, but the radius of the cross section decreases until reaching an apex of the closed end 804 (where the radius is zero).

The example suction anchor 800 also includes one or more ports 812, 813, 814 (or hatches) configured to fluidly couple a cavity 816 within the tubular body 802 (or respective parts of the cavity 816) to an exterior of the tubular body 802. The one or more ports 812, 814 (or hatches) may be disposed through or include an orifice in the perimeter wall 810. The one or more ports 812, 814 (or hatches) may also be configured to allow a source of suction (e.g., a pump), a source of fluid (e.g., an air compressor), or both, to couple to the example suction anchor 800. In some variations, part or all of the one or more ports 812, 814 is formed of metal (e.g., steel). In some variations, the cavity 816 extends uninterrupted from the closed end 804 to the open end 806 (or opening thereof). For example, the tubular body 802 may define a simple bucket shape. In these variations, the example suction anchor 800 may include a single port to fluidly couple the cavity 816 to the exterior of the tubular body 802. In other variations, such as shown in FIGS. 8B and 8C, the cavity 816 extends from the closed end 804 to the open end 806 (or opening thereof) and is interrupted by one or more walls partitioning the cavity 816 into chambers. Each chamber may be fluidly coupled to the exterior of the tubular body 802 through a single, respective port. Such fluid coupling may be allowed by conduits internal to the example suction anchor 800.

The example suction anchor 800 additionally includes a pad eye 818 extending from an outer surface of the tubular body 802 and configured to couple to a mooring line. For example, the pad eye 818 may be a plate structure extending from the outer surface of the tubular body that includes a hole for attaching a cable. However, other configurations of the pad eye 818 are possible. The pad eye 818 may resist loads applied to the example suction anchor 800 during deployment on the underwater floor 852 and may also facilitate handling of the example suction anchor 802. For example, the pad eye 818 may allow the example suction anchor 800 to be loaded onto and off of a transport vehicle, such a truck or boat. In some variations, the pad eye 818 extends from an outer surface on a side of the tubular body 802. In these variations, the pad eye 818 may allow the example suction anchor 800, when deployed, to better resist horizontal (e.g., transverse) loads applied to the tubular body 802, in addition to vertical (e.g., axial) and tangential loads. In some variations, the pad eye 818 extends from an outer surface on an apex of the closed end 804 of the tubular body 802. In such variations, the pad eye 818 may allow the example suction anchor 800, when deployed, to better resist vertical (e.g., axial) loads applied to the tubular body 802, in addition to horizontal (e.g., transverse) and tangential loads.

In some implementations, such as shown in FIG. 8C, the example suction anchor 800 includes a lid 820 configured to receive the edge 808 of the tubular body 802 and plug the opening of the open end 806. When coupled to the tubular body 802, the lid 802 covers the opening of the open end 806 and forms a seal with the edge 808, thereby enclosing the cavity 816. In this configuration, the lid 802 may effectively convert the cavity 816 into a buoyancy chamber. During deployment of the example suction anchor 800, the lid 820 may couple to the tubular body 802 to plug the opening of the open end 806 and seal air within the cavity 816. The example suction anchor 800 may thus be capable of floating on water, and as such, be capable of transporting to a target location on the water. For example, the pad eye 818 may be coupled via a cable to a tugboat for horizontal towing of the example suction anchor 800 out to the target location. In some instances, the lid 820 may include one or more pad eyes to assist with the deployment of the example suction anchor 802. The lid 820 may be formed of plastic (e.g., ABS), rubber, metal (e.g., steel), or some combination thereof. In some variations, the lid 820 is formed at least in part of cementitious materials. The portion of the lid 820 formed of cementitious materials may include layers of successively deposited cementitious materials, such as those deposited by 3DCP or 3D-casting processes. In these variations, the lid 802 may include a gasket or O-ring of plastic or rubber to assist in forming the seal with the edge 808.

The example suction anchor 800 may include other features to allow (or assist with) transportation on water. In some implementations, the example suction anchor 800 includes a balloon disposed within the cavity 816 of the tubular body 802. During deployment of the suction anchor 800, the balloon is inflated and the tubular body 802 disposed onto the water. After the example suction anchor 800 is floated to the target location, the balloon is deflated, thus allowing the example suction anchor 800 to submerge into the water. The balloon may be removed from the cavity 816 before the example suction anchor 800 is fully submerged. Alternatively, the balloon may remain in the cavity 816 in a deflated state as the example suction anchor 800 descends to the underwater floor 852.

The balloon may be configured to occupy part or all of the cavity 816 when inflated. For example, if the tubular body 802 defines a simple bucket shape, the balloon may be inflated to occupy an entirety of the cavity 816. However, if the cavity 816 is partitioned into chambers, the balloon may be configured to occupy a specific chamber, such as an end chamber of the tubular body 802 (e.g., a skirt chamber adjacent the open end 806). In some variations, the balloon may be enclosed in the cavity 816 by the lid 820. In these variations, the lid 820 is removed from the tubular body 802 before the balloon is deflated.

In some implementations, such as shown in FIGS. 8B and 8C, the tubular body 802 includes one or more interior walls 822 partitioning the cavity 816 within the tubular body 802 into a skirt chamber 824 and at least one buoyancy chamber 826. The skirt chamber 824 includes the open end 806 and the edge 808 and fluidly couples to the exterior of the tubular body 802 through a first port 812. Both the skirt chamber and the at least one buoyancy chamber 826 are configured to receive and disgorge fluid (e.g., water, air, etc.) in order to control a flotation capability of the example suction anchor 800. In these implementations, the example suction anchor 800 includes a second port 814, and the at least one buoyancy chamber 826 fluidly couples to the exterior of the tubular body 802 through the second port 814. In many variations, the one or more interior walls 822 are formed at least in part of cementitious materials. The portion of the one or more interior walls 822 formed of cementitious materials may include layers of successively deposited cementitious materials, such as those deposited by 3DCP or 3D-casting processes.

In some implementations, the at least one buoyancy chamber 826 includes a first buoyancy chamber 826a adjacent the closed end 804 of the tubular body 802 and a second buoyancy chamber 826b between the first buoyancy chamber 826a and the skirt chamber 824. The first buoyancy chamber 826a may include a portion of the perimeter wall 810 that defines the closed end 804. In many variations, the first buoyancy chamber 826*a* is fluidly coupled to the exterior of the tubular body 802 through the second port 814 and the second buoyancy chamber 826b is fluidly coupled to the exterior of the tubular body 802 through a third port. In some variations, the second buoyancy chamber 826b may be partitioned by the one or more interior walls 822 into a plurality of sub-chambers, such as shown in FIGS. 8B and 8C. The plurality of sub-chambers may share a single port fluidly-coupling the second buoyancy chamber 826b to the exterior of the tubular body 802. Alternatively, each sub-chamber may be fluidly coupled to the exterior of the tubular body 802 through a respective port. In some variations, the plurality of sub-chambers are fluidly coupled to each other via holes or orifices in the one or more interior walls 822.

In some variations, such as shown in FIGS. 8B and 8C, the one or more interior walls 822 further partition the cavity 816 of the tubular body 802 into a first conduit 828 and a second conduit 830. The first conduit 828 may fluidly couple the skirt chamber 824 to the first port 812, and the second conduit 830 may fluidly couple the at least one buoyancy chamber 826 to the second port 814. The first and second conduits 828, 830 may be formed at least in part of cementitious materials. However, the first and second conduits 828, 830 may include portions formed of another material, such as metal (e.g., steel) or plastic (e.g., ABS).

As described above, the tubular body 802 and the one or more interior walls 822 may be formed at least in part of cementitious material. In some implementations, the cementitious material includes a means for mechanically strengthening the cementitious material. For example, the cementitious material may include a post-tensioning device disposed therethrough. The post-tensioning device may include a cable passing through a channel in the cementitious material and set in a tensile state. The cable may be in direct contact with (or bonded to) the cementitious material. Alternatively, the cable may be disposed through a conduit embedded in the cementitious material defining the channel. The tensile state may allow the cable to apply a compressive pressure or force to the cementitious material. In another example, the cementitious material may include reinforcing elements disposed therein. The reinforcing elements may be configured as fiber, mesh, rebar, and so forth, and may be blended within (and bonded to) the cementitious material. Various materials may be used to form the reinforcement elements, such as steel, basalt, polymers, or glass. However, other materials are possible.

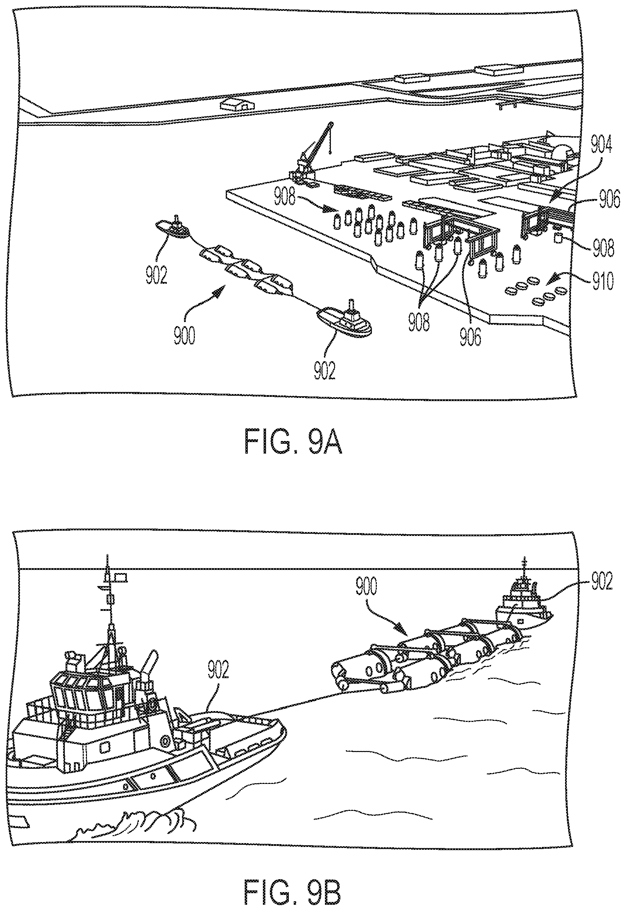

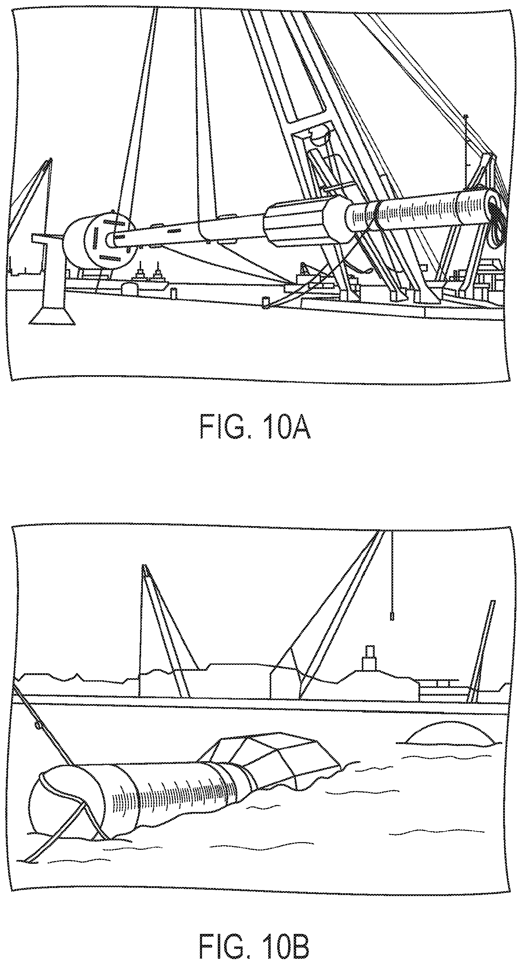

During operation, the example suction anchor 800 may transition through multiple stages of use, including deployment, self-penetration, embedment, and removal. For the deployment stage, the example suction anchor 800 (or 3DSA) and lid 820 are manufactured and assembled into 3DSA units, optionally linked to other units, and horizontally wet-towed to the installation site with common tugs. FIG. 9A presents a schematic diagram, in perspective view, of a group of 3DSA units 900 being horizontally wet-towed by tugboats 902 from a quay 904 where the 3DSA units 900 were manufactured and assembled. The quay 904 includes systems 906 for the manufacture of suction anchors 908, lids 910, or both by 3DCP or 3D-casting processes. FIG. 9B presents a schematic diagram, in perspective view, of assembled 3DSA units 900 of FIG. 9A being horizontally wet-towed by tugboats 902 along an open body of water to a target location. A similar approach proved successful for self-installing mono piles, such as shown in FIGS. 10A and 10B. More conventional suction anchor transportation and installation methods can be used if desired such as placing the 3DSA units 900 on the deck of an anchor handling vessel or barge for transportation to the installation site. Now referring back to FIGS. 8A-8D, at the target location, the lid 820 is removed by flooding the skirt chamber 824 (or cavity 816). The example suction anchor 800 is lowered by flooding the at least one buoyancy chamber 826 with water in a controlled fashion, such a through a pump and valve system.

After the example suction anchor 800 lowers onto the underwater floor 852, the edge 808 of the skirt chamber 824 (or tubular body 802) penetrates into the underwater floor 852 and the skirt chamber 824 (or tubular body 802) partially embeds under self-weight up to approximately 60% of its height depending on soil conditions and properties of the example suction anchor 800. Such embedment corresponds to a self-penetration of the example suction anchor 800 into the underwater floor 852. By incorporating cementitious materials, the example suction anchor 800 is heavier relative to conventional designs. This heavier construction is synergistic with deployment because the moderately heavier mass increases the self-penetration depth of the skirt chamber 821 (or tubular body 802) as well as increasing a lift and overturning capacity of the example suction anchor 800 by reducing the diameter, length, and cost.

During the embedment stage, embedment into the underwater floor 852 (or further embedment) is achieved by the pressure differential caused by the pumping of the water out of the skirt chamber 824 (or cavity 816), such as through the one or more ports 812, 814 (or hatches). Such pumping creates what is called an "underpressure," which is a negative pressure differential (relative to ambient pressure) developed inside the skirt chamber 824 (or cavity 816) when pumping water out. The resultant pressure differential across walls defining the skirt chamber 824 (or cavity 816) effectively pushes the example suction anchor 800 into the underwater floor 852. The 3DSA pumps and lid 820 are then returned to the port-side point of departure (e.g., a dock, a quay, etc.) for reuse. FIG. 8D illustrates instances of the example suction anchor 800 securing different types of structures, such as semi-submersible structures (i.e., the wind turbine structure 850 on the left) and spar foundations (i.e., the wind turbine structure 850 on the right). FIG. 8D also illustrates the example suction anchor 800 coupled to the wind turbine structures 850 with different mooring types, including taut and semi-taut mooring (left) and slack or catenary mooring (right). For removal, the example suction anchor 800 can be retrieved after use by reversing the embedment process, e.g., applying an "overpressure" inside the skirt chamber 824 (or cavity 816). The over pressure is a positive pressure differential (relative to ambient pressure) inside the tubular body 802 when pumping water out of the skirt chamber 824 (or cavity 816) to extract the example suction anchor 800. Such pumping may also include introducing air into the skirt chamber 824 (or cavity 816) by action of an air compressor.

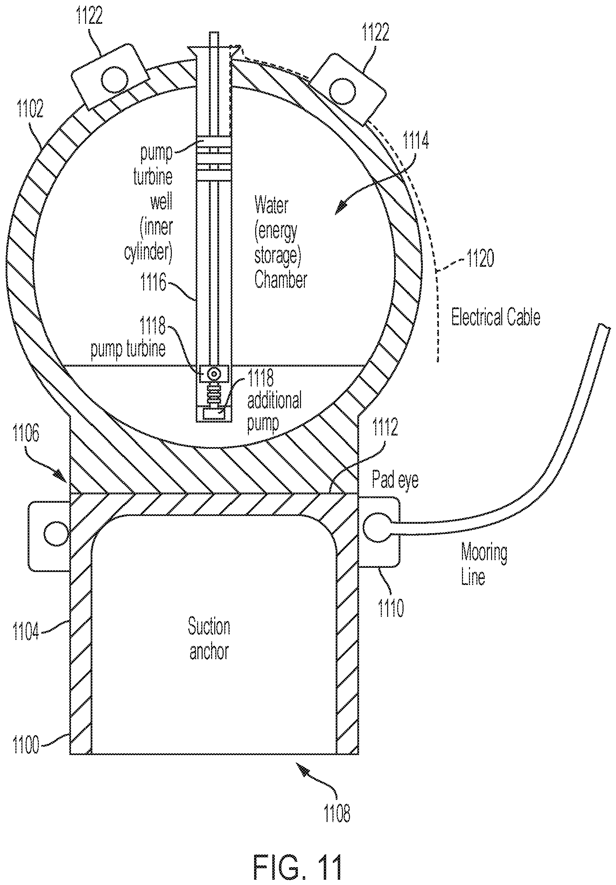

In some implementations, the example suction bucket 800 may include an energy storage chamber configured to store and release water to, respectively, store and supply energy (e.g., hydraulic energy, electrical energy, etc.). For example, the closed end 804 of the tubular body 802 may be coupled to an energy storage chamber that is formed at least in part of cementitious materials. The energy storage chamber may be manufactured using 3DCP or 3D-casting processes. FIG. 11 presents a schematic diagram, in cross section, of an example suction bucket 1100 that includes an energy storage chamber 1102. The example suction bucket 1100 may be analogous to the example suction bucket described in relation to FIGS. 8A-8D. The example suction bucket 1100 includes a tubular body 1104 having a closed end 1106 and an open end 1108, and also includes a port or hatch (not shown) and multiple pad eyes 1110. The tubular body 1104 is coupled to the energy storage chamber 1102 along flat surface 1112.

The energy storage chamber 1102 includes a chamber 1114 configured to store and release water. The energy storage chamber 1102 also includes a pump turbine well defined by an inner conduit or cylinder 1116 within the chamber 1114. The energy storage chamber 1102 additionally includes one or more turbines or pumps 1118 configured to convert electrical energy into hydraulic energy (and vice versa). An electrical cable 1120 may electrically couple the one or more turbines or pumps 1118 to a source of electrical energy, such as a wind turbine. The electrical cable 1120 may also electrically couple the one or more turbines or pumps 1118 to a sink of electrical energy, such as a consumer of electrical energy (e.g., electrical equipment). In some variations, the energy storage chamber 1102 may include pad eyes 1122 to facilitate securing of a structure to an underwater floor. The pad eyes 1122 may also facilitate the handling and manipulation of the example suction bucket 1100, such as during deployment, self-penetration, embedment, and removal.

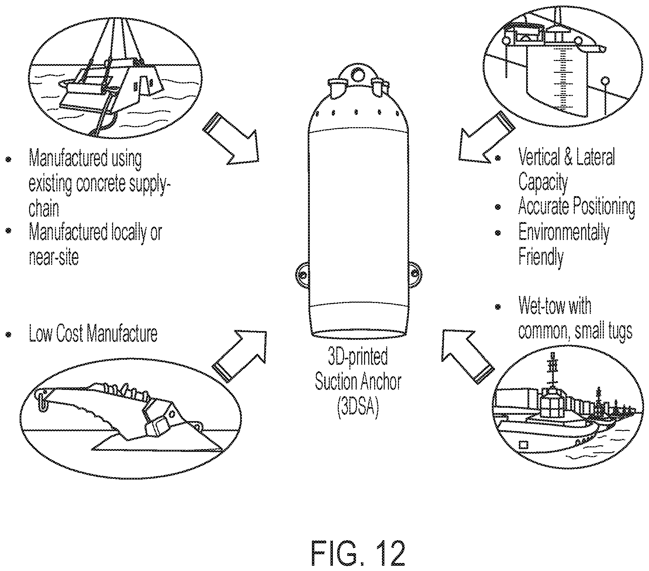

The 3DCP suction anchors, such as described herein, may reduce the installed costs by up to 80% compared to conventional suction buckets fabricated by rolling steel plates and installed via specialized and costly anchor-handling vessels. FIG. 12 presents a schematic diagram of features and advantages of an example suction anchor manufactured using 3DCP processes. Furthermore, the 3DCP suction anchors can be manufactured using existing concrete supply chains located in nearly every region of the country. 3D concrete printing or 3DCP, is a relatively new concrete manufacturing technology that reduces manufacturing capital cost by eliminating construction formwork, increasing automation, and using low-cost, corrosion-resistant, and domestically available concrete materials. While several concrete manufacturing methods are capable of manufacturing 3D suction anchor modules (such as precast reinforced concrete, cast in place concrete, or slip formed concrete), 3DCP has the potential for the most cost reduction due to the extent of automated on-site fabrication and ability to manufacture complex shapes.

The 3DCP process facilitates optimal material distribution within a functionally optimized shape without building conventional formwork. For example, walls defining an edge of a skirt chamber can easily be tapered to facilitate embedment without the need of further fabrication or tooling. Similarly, the 3D suction anchors could be equipped with void chambers to realize necessary buoyancy for horizontal wet towing. Such compartmental floatation chambers offer additional structural capacity and mass to resist uplift, and the pneumatic inner ducts among the various chambers and post-tensioned reinforcement chambers are fabricated and integrated in the printing process.

The 3DSA's can be manufactured directly at the quay (e.g. see FIG. 9A), as one piece or in sub-modules if necessary, depending on the application requirements and sizes. The 3DCP process may print the 3D suction anchor next to a pre-manufactured lid to ensure a water-tight fit. The suction anchors may be post-tensioned with tendon jacks located along a perimeter of the skirt chamber. The suction anchors may also be fitted with pneumatic valves, pump connectors, bottom plugs, and then pressure tested.

In some implementations, a method of manufacturing a suction anchor includes depositing layers of flowable cementitious material on top of each other to form at least part of a tubular body. The layers of flowable cementitious material may be deposited successively on top of each other such that a subsequent layer comes in direct contact with a prior layer. The flowable cementitious material is capable of hardening into solidified cementitious material. The tubular body includes a closed end and an open end. The tubular body also includes an edge defining an opening for the open end and configured to penetrate an underwater floor. The tubular body additionally includes a port configured to fluidly-couple at least part of a cavity within the tubular body to an exterior of the tubular body. The method also includes securing a pad eye to an exterior wall of the tubular body. The pad eye is configured to couple to a mooring line. In some variations, the portion of the tubular body formed by the layers of flowable cementitious material includes a perimeter wall defining a shape of the tubular body.

In some implementations, the method includes hardening the layers of flowable cementitious material into layers of solidified cementitious material. In some implementations, the method includes disposing reinforcing elements in the flowable cementitious material before depositing the layers. In some implementations, depositing the layers of flowable cementitious material includes embedding a support structure in the layers of flowable cementitious material. The support structure may include a mesh, a cage, or an assembly of coupled rods or bars formed of steel, basalt, or glass fiber. In further implementations, the method includes coupling rebar elements to each other to define at least part of the support structure.

In some implementations, the tubular body includes a channel through the layers of flowable cementitious material. In these implementations, the method includes disposing a post-tensioning device through the channel and tensioning the post-tensioning device after the layers of flowable cementitious material harden into layers of solidified cementitious material. In some variations, depositing layers of flowable cementitious material includes leaving space within the layers of flowable cementitious material to form the channel. In some variations, the method includes inserting a conduit through the layers of flowable cementitious material before the layers harden. The conduit defines the channel through the layers of flowable material. In some variations, depositing layers of flowable cementitious material includes embedding a conduit in the layers of flowable cementitious material. The conduit defines the channel through the layers of flowable material.

In some implementations, depositing the layers of flowable cementitious material includes spraying layers of the flowable cementitious material on top of each other. In some implementations, depositing the layers of flowable cementitious materials includes printing layers of the flowable cementitious material on top of each other.

In some implementations, the portion of the tubular body formed by the layers of flowable cementitious material includes a first portion and a second portion. In such implementations, depositing the layers of flowable cementitious material includes depositing first layers of flowable cementitious material on top of each other to form the first portion. Depositing the layers of flowable cementitious material also includes hardening the first layers of flowable cementitious material to solidify the first portion and depositing second layers of flowable cementitious material on the solidified first portion to form the second portion. The second layers are deposited on top of each other.

In some implementations, the tubular body includes one or more interior walls partitioning the cavity within the tubular body into a skirt chamber and at least one buoyancy chamber. The skirt chamber includes the open end and the edge of the tubular body, and the port fluidly couples the skirt chamber to the exterior of the tubular body. The tubular body also includes a second port configured to fluidly couple the at least one buoyancy chamber to the exterior of the tubular body. In some variations, the portion of the tubular body formed by the layers of flowable cementitious material includes the one or more interior walls.

In some implementations, the edge of the tubular body is formed of metal. In these implementations, depositing the layers of flowable cementitious material includes contacting a surface of the edge with one or more layers of flowable cementitious material. In some variations, the method includes coupling the port to the support structure. In some variations, securing the pad eye to the exterior wall includes coupling the pad eye to the support structure. The support structure includes a portion configured to reinforce the exterior wall adjacent the pad eye.

While this specification contains many details, these should not be understood as limitations on the scope of what may be claimed, but rather as descriptions of features specific to particular examples. Certain features that are described in this specification or shown in the drawings in the context of separate implementations can also be combined. Conversely, various features that are described or shown in the context of a single implementation can also be implemented in multiple embodiments separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described components and systems can generally be integrated together in a single product or packaged into multiple products.

A number of embodiments have been described. Nevertheless, it will be understood that various modifications can be made. Accordingly, other embodiments are within the scope of the disclosure.

## Claims

1. A method of manufacturing a suction anchor (800), comprising:
depositing layers of flowable cementitious material on top of each other to form at least part of a tubular body (802), the flowable cementitious material capable of hardening into solidified cementitious material, the tubular body (802) comprising:
a closed end (804) and an open end (806),
an edge (808) defining an opening for the open end (806) and configured to penetrate an underwater floor, and
a port (812, 814) configured to fluidly-couple at least part of a cavity (816) within the tubular body (802) to an exterior of the tubular body (802);
securing a pad eye (818) to an exterior wall of the tubular body (802), the pad eye (818) configured to couple to a mooring line;
wherein the portion of the tubular body (802) formed by the layers of flowable cementitious material comprises a first portion and a second portion; and
wherein depositing the layers of flowable cementitious material comprises:
depositing first layers of flowable cementitious material on top of each other to form the first portion,
hardening the first layers of flowable cementitious material to solidify the first portion, and
depositing second layers of flowable cementitious material on the solidified first portion to form the second portion, the second layers deposited on top of each other.

2. The method of claim 1, wherein the portion of the tubular body (802) formed by the layers of flowable cementitious material comprises a perimeter wall (810) defining a shape of the tubular body (802).

3. The method of claim 1, comprising:
hardening the layers of flowable cementitious material into layers of solidified cementitious material.

4. The method of claim 1, comprising:
disposing reinforcing elements in the flowable cementitious material before depositing the layers.

5. The method of claim 1, wherein depositing the layers of flowable cementitious material comprises embedding a support structure in the layers of flowable cementitious material.

6. The method of claim 5, wherein the method comprises:
coupling rebar elements to each other to define at least part of the support structure.

7. The method of claim 1,
wherein the tubular body (802) comprises a channel through the layers of flowable cementitious material; and
wherein the method comprises:
disposing a post-tensioning device through the channel, and
tensioning the post-tensioning device after the layers of flowable cementitious material harden into layers of solidified cementitious material.

8. The method of claim 7, wherein depositing layers of flowable cementitious material comprises leaving space within the layers of flowable cementitious material to form the channel.

9. The method of claim 1, comprising:
assembling a support structure configured to be embedded in the portion of the tubular body (802) formed by the layers of flowable cementitious material.

10. The method of claim 1,
wherein the tubular body (802) comprises one or more interior walls (822) partitioning the cavity (816) within the tubular body (802) into a skirt chamber (824) and at least one buoyancy chamber (826), the skirt chamber (824) comprising the open end (806) and the edge (808);
wherein the port is a first port (812) and the skirt chamber (824) fluidly couples to the exterior of the tubular body (802) through the first port (812); and
wherein the tubular body (802) comprises a second port (814) and the at least one buoyancy chamber (826) fluidly couples to the exterior of the tubular body (802) through the second port (814).

11. The method of claim 10, comprising:
disposing a balloon within the cavity (816) of the tubular body (802).

## Patentansprüche

1. Verfahren zum Herstellen eines Saugankers (800), umfassend:
Aufbringen von Schichten eines fließfähigen zementhaltigen Materials übereinander, um zumindest einen Teil eines rohrförmigen Körpers (802) zu bilden, wobei das fließfähige zementhaltige Material in der Lage ist, in verfestigtes zementhaltiges Material auszuhärten, wobei der rohrförmige Körper (802) umfasst:
ein geschlossenes Ende (804) und ein offenes Ende (806), einen Rand (808), welcher eine Öffnung für das offene Ende (806) definiert und dazu konfiguriert ist, einen Unterwasserboden zu durchdringen, und
einen Anschluss (812, 814), welcher dazu konfiguriert ist, zumindest einen Teil eines Hohlraums (816) innerhalb des rohrförmigen Körpers (802) fluidisch an eine Außenseite des rohrförmigen Körpers (802) zu koppeln;
Befestigen eines Schäkels (818) an einer Außenwand des rohrförmigen Körpers (802), wobei der Schäkel (818) dazu konfiguriert ist, an einen Festmacher zu koppeln;
wobei der Abschnitt des rohrförmigen Körpers (802), welcher durch die Schichten von fließfähigem zementhaltigem Material gebildet ist, einen ersten Abschnitt und einen zweiten Abschnitt umfasst; und
wobei Aufbringen der Schichten von fließfähigem zementhaltigem Material umfasst:
Aufbringen von ersten Schichten von fließfähigem zementhaltigem Material übereinander, um den ersten Abschnitt zu bilden,
Aushärten von ersten Schichten von fließfähigem zementhaltigem Material, um den ersten Abschnitt zu verfestigen,und
Aufbringen von zweiten Schichten von fließfähigem zementhaltigem Material auf dem verfestigten ersten Abschnitt, um den zweiten Abschnitt zu bilden, wobei die zweiten Schichten übereinander aufgebracht sind.

2. Verfahren nach Anspruch 1, wobei der Abschnitt des rohrförmigen Körpers (802), welcher durch die Schichten von fließfähigem zementhaltigem Material gebildet ist, eine Umfangswand (810) umfasst, welche eine Form des rohrförmigen Körpers (802) definiert.

3. Verfahren nach Anspruch 1, umfassend:
Aushärten der Schichten von fließfähigem zementhaltigem Material in Schichten von verfestigtem zementhaltigem Material.

4. Verfahren nach Anspruch 1, umfassend:
Anordnen von Verstärkungselementen in dem fließfähigen zementhaltigen Material vor Aufbringen der Schichten.

5. Verfahren nach Anspruch 1, wobei Aufbringen der Schichten von fließfähigem zementhaltigem Material Einbetten einer Stützstruktur in die Schichten von fließfähigem zementhaltigem Material umfasst.

6. Verfahren nach Anspruch 5, wobei das Verfahren umfasst:
Koppeln von Bewehrungselementen aneinander, um zumindest einen Teil der Stützstruktur zu definieren.

7. Verfahren nach Anspruch 1,
wobei der rohrförmige Körper (802) einen Kanal durch die Schichten von fließfähigem zementhaltigem Material umfasst; und
wobei das Verfahren umfasst:
Anordnen einer Spannbewehrungsvorrichtung durch den Kanal, und
Spannen der Spannbewehrungsvorrichtung nach dem Aushärten der Schichten von fließfähigem zementhaltigem Material in Schichten von verfestigtem zementhaltigem Material.

8. Verfahren nach Anspruch 7, wobei Aufbringen von Schichten von fließfähigem zementhaltigem Material Freilassen von Raum innerhalb der Schichten von fließfähigem zementhaltigem Material umfasst, um den Kanal zu bilden.

9. Verfahren nach Anspruch 1, umfassend:
Zusammenbauen einer Stützstruktur, welche dazu konfiguriert ist, in den Abschnitt des rohrförmigen Körpers (802), welcher durch die Schichten von fließfähigem zementhaltigem Material gebildet ist, eingebettet zu werden.

10. Verfahren nach Anspruch 1,
wobei der rohrförmige Körper (802) eine oder mehrere Innenwände (822) umfasst, welche den Hohlraum (816) innerhalb des rohrförmigen Körpers (802) in eine Schürzenkammer (824) und zumindest eine Auftriebskammer (826) unterteilen, wobei die Schürzenkammer (824) das offene Ende (806) und den Rand (808) umfasst;
wobei der Anschluss ein erster Anschluss (812) ist und die Schürzenkammer (824) mit der Außenseite des rohrförmigen Körpers (802) durch den ersten Anschluss (812) fluidisch koppelt; und
wobei der rohrförmige Körper (802) einen zweiten Anschluss (814) umfasst und die zumindest eines Auftriebskammer (826) mit der Außenseite des rohrförmigen Körper (802) durch den zweiten Anschluss (814) fluidisch koppelt.

11. Verfahren nach Anspruch 10, umfassend:
Anordnen eines Ballons innerhalb des Hohlraums (816) des rohrförmigen Körpers (802).

## Revendications

1. Procédé de fabrication d'une ancre à succion (800), comprenant :
le dépôt de couches de matériau cimentaire fluide les unes sur les autres pour former au moins une partie d'un corps tubulaire (802), le matériau cimentaire fluide pouvant durcir pour former un matériau cimentaire solidifié, le corps tubulaire (802) comprenant :
une extrémité fermée (804) et une extrémité ouverte (806),
un bord (808) définissant une ouverture pour l'extrémité ouverte (806) et configuré pour pénétrer dans un fond sous-marin, et
un orifice (812, 814) configuré pour coupler fluidiquement au moins une partie d'une cavité (816) à l'intérieur du corps tubulaire (802) à un extérieur du corps tubulaire (802) ;
la fixation d'une main de fer (818) à une paroi extérieure du corps tubulaire (802), la main de fer (818) étant configurée pour être couplée à une amarre ;
dans lequel la partie du corps tubulaire (802) formée par les couches de matériau cimentaire fluide comprend une première partie et une deuxième partie ; et
dans lequel le dépôt des couches de matériau cimentaire fluide comprend :
le dépôt de premières couches de matériau cimentaire fluide les unes sur les autres pour former la première partie,
le durcissement des premières couches de matériau cimentaire fluide pour solidifier la première partie, et
le dépôt de deuxièmes couches de matériau cimentaire fluide sur la première partie solidifiée pour former la deuxième partie, les deuxièmes couches étant déposées les unes sur les autres.

2. Procédé selon la revendication 1, dans lequel la partie du corps tubulaire (802) formée par les couches de matériau cimentaire fluide comprend une paroi périmétrique (810) définissant une forme du corps tubulaire (802).

3. Procédé selon la revendication 1, comprenant :
le durcissement des couches de matériau cimentaire fluide pour former des couches de matériau cimentaire solidifié.

4. Procédé selon la revendication 1, comprenant :
la disposition d'éléments de renfort dans le matériau cimentaire fluide avant le dépôt des couches.

5. Procédé selon la revendication 1, dans lequel le dépôt des couches de matériau cimentaire fluide comprend l'incorporation d'une structure de support dans les couches de matériau cimentaire fluide.

6. Procédé selon la revendication 5, dans lequel le procédé comprend :
le couplage d'éléments de barres d'armature les uns aux autres pour définir au moins une partie de la structure de support.

7. Procédé selon la revendication 1,
dans lequel le corps tubulaire (802) comprend un canal à travers les couches de matériau cimentaire fluide ; et
dans lequel le procédé comprend :
le dépôt d'un dispositif de post-tension à travers le canal, et
la mise en tension du dispositif de post-tension après que les couches de matériau cimentaire fluide ont durci pour former des couches de matériau cimentaire solidifié.

8. Procédé selon la revendication 7, dans lequel le dépôt de couches de matériau cimentaire fluide comprend le fait de laisser un espace à l'intérieur des couches de matériau cimentaire fluide pour former le canal.

9. Procédé selon la revendication 1, comprenant : l'assemblage d'une structure de support configurée pour être incorporée dans la partie du corps tubulaire (802) formée par les couches de matériau cimentaire fluide.

10. Procédé selon la revendication 1,
dans lequel le corps tubulaire (802) comprend une ou plusieurs parois intérieures (822) séparant la cavité (816) à l'intérieur du corps tubulaire (802) en une chambre de jupe (824) et au moins une chambre de flottaison (826), la chambre de jupe (824) comprenant l'extrémité ouverte (806) et le bord (808) ;
dans lequel l'orifice est un premier orifice (812) et la chambre de jupe (824) est couplée fluidiquement à l'extérieur du corps tubulaire (802) par le biais du premier orifice (812) ; et
dans lequel le corps tubulaire (802) comprend un deuxième orifice (814) et l'au moins une chambre de flottaison (826) est couplée fluidiquement à l'extérieur du corps tubulaire (802) par le biais du deuxième orifice (814).

11. Procédé selon la revendication 10, comprenant :
la disposition d'un ballon à l'intérieur de la cavité (816) du corps tubulaire (802).
